# EUROPEAN PATENT APPLICATION

(11) **EP 4 629 459 A1**
(43) Date of publication of application: **08.10.2025**
(21) Application number: 25160773.5
(22) Date of filing: 27.02.2025
(51) Int. Cl.: H02H 7/122, H02H 9/04, H02M 1/32, H02M 7/44

(54) **POWER CONVERSION APPARATUS**

(30) Priority: 06.03.2024 CN 202410254873
(71) Applicant: Huawei Digital Power Technologies Co., Ltd., Shenzhen, Guangdong 518043 (CN)
(72) Inventor: LI, Luo, Shenzhen 518043 (CN); RU, Yi, Shenzhen 518043 (CN); RAO, Sheng, Shenzhen 518043 (CN)
(74) Representative: Gill Jennings & Every LLP

(57) **Abstract**

This application provides a power conversion apparatus. The power conversion apparatus includes a direct current end, a power conversion circuit, a direct current side protection circuit, a first alternating current side protection circuit, and an alternating current end. The direct current side protection circuit is connected between the direct current end and protective earthing, and is configured to be in a conducted state when a direct current end voltage between the direct current end and the protective earthing is greater than a first threshold, for the direct current end voltage to be clamped at a first voltage value. A plurality of protection branches of the first alternating current side protection circuit are connected between the alternating current end and the protective earthing, and are configured as: when an alternating current end voltage between the alternating current end and the protective earthing is greater than a second threshold, at least one of the plurality of protection branches is in a conducted state, for the alternating current end voltage to be clamped at a second voltage value. An absolute value of a difference between the first voltage value and the second voltage value is less than or equal to a safety error threshold. Further, a most part of a common-mode lightning current can be prevented from damaging a power component in the power conversion circuit, to protect the power conversion apparatus.

## Description

### TECHNICAL FIELD

This application relates to the field of power supply technologies, and in particular, to a power conversion apparatus.

### BACKGROUND

A lightning strike is a discharge phenomenon that occurs when charged clouds are close to each other or a charged cloud and the ground are close to each other. During this discharge, strong lightning and a loud sound are produced, accompanied by a large amount of energy transfer. Outdoor devices such as photovoltaic inverters are equipped with lightning protection circuits to ensure safe operation.

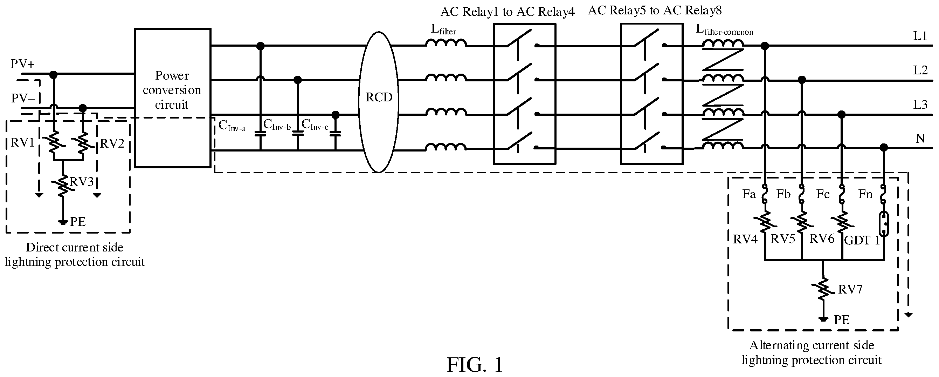

Currently, a three-phase four-wire inverter mainly uses a lightning protection circuit shown in FIG. 1. As shown in FIG. 1, the three-phase four-wire inverter mainly includes a power conversion circuit, a direct current side lightning protection circuit, and an alternating current side lightning protection circuit. The direct current side lightning protection circuit includes a varistor RV1, a varistor RV2, and a varistor RV3, one end of the varistor RV1 and one end of the varistor RV2 are respectively connected to a direct current end PV+ and a direct current end PV- of the inverter, and the other end of the varistor RV1 is connected to the other end of the varistor RV2 and then is connected to protective earthing PE via the varistor RV3. The alternating current side lightning protection circuit includes a varistor RV4, a varistor RV5, a varistor RV6, a varistor RV7, and a gas discharge tube GDT 1. One end of the varistor RV4, one end of the varistor RV5, one end of the varistor RV6, and one end of the gas discharge tube GDT 1 are respectively connected to a live wire end L1, a live wire end L2, a live wire end L3, and a neutral wire end N of the inverter; and the other end of the varistor RV4, the other end of the varistor RV5, and the other end of the varistor RV6 are connected to the other end of the gas discharge tube GDT 1 and then connected to the protective earthing PE via the varistor RV7. When a common-mode lightning current exists on a direct current side of the three-phase four-wire inverter, both a voltage between the direct current end PV+ and the protective earthing PE and a voltage between the direct current end PV- and the protective earthing PE are greater than a conduction voltage threshold of the direct current side lightning protection circuit, and the direct current side lightning protection circuit is in a conducted state. Therefore, a part of the common-mode lightning current is discharged via the direct current side lightning protection circuit. In addition, another part of the common-mode lightning current flows through the power conversion circuit and reaches the neutral wire end N, so that the gas discharge tube GDT 1 and the varistor RV7 are turned on for discharge.

Although the lightning protection circuit shown in FIG. 1 may discharge the common-mode lightning current, after the gas discharge tube GDT 1 and the varistor RV7 are turned on, a clamping voltage between the neutral wire end N and the protective earthing PE is low. Consequently, a most part of the common-mode lightning current flows through the power conversion circuit, and a power component in the power conversion circuit is damaged. As a result, the inverter cannot work normally.

### SUMMARY

This application provides a power conversion apparatus, to prevent a power component in a power conversion circuit from being damaged by a most part of a common-mode lightning current, and protect the power conversion apparatus, so as to improve stability of the power conversion apparatus.

According to a first aspect, this application provides a power conversion apparatus. The power conversion apparatus includes a direct current end, a power conversion circuit, a direct current side protection circuit, a first alternating current side protection circuit, and an alternating current end. The power conversion circuit is connected between the direct current end and the alternating current end, and is configured to implement electric energy conversion between the direct current end and the alternating current end. The direct current side protection circuit is connected between the direct current end and protective earthing, and is configured to be in a conducted state when a direct current end voltage between the direct current end and the protective earthing is greater than a first threshold, for the direct current end voltage to be clamped at a first voltage value. The first alternating current side protection circuit includes a plurality of protection branches. The plurality of protection branches are connected between the alternating current end and the protective earthing, and are configured as: when an alternating current end voltage between the alternating current end and the protective earthing is greater than a second threshold, at least one of the plurality of protection branches is in a conducted state, for the alternating current end voltage to be clamped at a second voltage value, where an absolute value of a difference between the first voltage value and the second voltage value is less than or equal to a safety error threshold.

In this implementation, when a common-mode lightning current exists at the direct current end of the power conversion apparatus, the power conversion apparatus may discharge the common-mode lightning current via the direct current side protection circuit and the at least one protection branch of the first alternating current side protection circuit that are in the conducted state, to quickly discharge the common-mode lightning current. Because the absolute value of the difference between the first voltage value and the second voltage value is less than or equal to the safety error threshold (including 0), in a process of discharging the common-mode lightning current, a case in which a clamping voltage of the direct current side protection circuit is greater than a clamping voltage of the first alternating current side protection circuit and a most part of the common-mode lightning current flows through the power conversion circuit can be avoided. This avoids damage to a power component in the power conversion circuit, and protects the power conversion apparatus, to improve stability of the power conversion apparatus.

With reference to the first aspect, in a first possible implementation, the alternating current end includes a live wire end and a neutral wire end, and the plurality of protection branches include a live wire protection branch and a neutral wire protection branch. The live wire protection branch is connected between the live wire end and the protective earthing, and is configured to be in a conducted state when a live wire end voltage between the live wire end and the protective earthing is greater than the second threshold, for the live wire end voltage to be clamped at the second voltage value. The neutral wire protection branch is connected between the neutral wire end and the protective earthing, and is configured to be in a conducted state when a neutral wire end voltage between the neutral wire end and the protective earthing is greater than the second threshold, for the neutral wire end voltage to be clamped at the second voltage value.

In this implementation, when the common-mode lightning current exists at the direct current end of the power conversion apparatus, the power conversion apparatus may discharge the common-mode lightning current via the direct current side protection circuit, the live wire protection branch, and the neutral wire protection branch that are in the conducted state, to quickly discharge the common-mode lightning current, and increase a speed of discharging the common-mode lightning current. Because the clamping voltages of the live wire end and the neutral wire end are both the second voltage value, and an absolute value of a difference between the clamping voltage of each of the live wire end and the neutral wire end and the clamping voltage of the direct current end is less than or equal to the safety error threshold (including 0), a case in which a most part of the common-mode lightning currents flow through the power conversion circuit can be avoided. This avoids damage to the power component in the power conversion circuit, and protects the power conversion apparatus, to improve stability of the power conversion apparatus.

With reference to the first possible implementation of the first aspect, in a second possible implementation, the live wire protection branch includes a first protection unit and a second protection unit, and the neutral wire protection branch includes a second protection unit and a third protection unit. One end of the first protection unit and one end of the third protection unit are respectively connected to the live wire end and the neutral wire end, and the other end of the first protection unit is connected to the other end of the third protection unit and then connected to the protective earthing via the second protection unit. The first protection unit is configured to be in a turn-on state when the live wire end voltage is greater than the second threshold. The second protection unit is configured to be in a turn-on state when the live wire end voltage or the neutral wire end voltage is greater than the second threshold. The third protection unit is configured to be in a turn-on state when the neutral wire end voltage is greater than the second threshold.

In this implementation, the first alternating current side protection circuit can implement protection against the common-mode lightning current at the alternating current end, and implement protection against a differential-mode lightning current at the alternating current end. Therefore, applicability is high.

With reference to the second possible implementation of the first aspect, in a third possible implementation, each of the first protection unit, the second protection unit, and the third protection unit includes one protection element, or at least two protection elements that are connected in series or in parallel. The protection element includes a gas discharge tube, a varistor, or a transient suppression diode.

In this implementation, a structure of a protection unit of the first alternating current side protection circuit and a type of a protection element of the protection unit are diversified, so that diversity of a structure of the power conversion apparatus can be improved, and flexibility is high.

With reference to the first aspect, in a fourth possible implementation, the alternating current end includes a first end and a second end, and the plurality of protection branches include a first protection branch and a second protection branch. The first protection branch is connected between the first end and the protective earthing, and the second protection branch is connected between the second end and the protective earthing. An impedance value of the second protection branch increases as a change rate of a current flowing through the second protection branch increases, for the second protection branch to be in a disconnected state and a first end voltage between the first end and the protective earthing to be greater than the second threshold. The first protection branch is configured to be in a conducted state when the first end voltage is greater than the second threshold, for the first end voltage to be clamped at the second voltage value.

In this implementation, when the common-mode lightning current exists at the direct current end of the power conversion apparatus, the power conversion apparatus may discharge the common-mode lightning current via the direct current side protection circuit and the first protection branch that are in the conducted state, to quickly discharge the common-mode lightning current. Because the second protection branch is in the disconnected state, the clamping voltage of the first end is the second voltage value, and an absolute value of a difference between the clamping voltage of the first end and the clamping voltage of the direct current end is less than or equal to the safety error threshold (including 0), the case in which the most part of the common-mode lightning currents flow through the power conversion circuit can be avoided. This avoids damage to the power component in the power conversion circuit, and protects the power conversion apparatus, to improve stability of the power conversion apparatus.

With reference to the fourth possible implementation of the first aspect, in a fifth possible implementation, the first protection branch includes a first protection unit and a second protection unit, and the second protection branch includes a second protection unit and a third protection unit. One end of the first protection unit and one end of the third protection unit are respectively connected to the first end and the second end, and the other end of the first protection unit is connected to the other end of the third protection unit and then connected to the protective earthing via the second protection unit. The first protection unit and the second protection unit are configured to be in the turn-on state when the first end voltage is greater than the second threshold. An impedance value of the third protection unit increases as a change rate of a current flowing through the third protection unit increases, for the third protection unit to be in a turn-off state.

In this implementation, the first alternating current side protection circuit has a simple structure and is easy to implement.

With reference to the fifth possible implementation of the first aspect, in a sixth possible implementation, each of the first protection unit and the second protection unit includes one protection element, or at least two protection elements that are connected in series or in parallel. The protection element includes a gas discharge tube, a varistor, or a transient suppression diode. The third protection unit includes an inductor.

In this implementation, structures of the first protection unit and the second protection unit, and types of protection elements of the first protection unit and the second protection unit are diversified, so that diversity of the structure of the power conversion apparatus can be improved, and flexibility is high.

With reference to any one of the fourth possible implementation of the first aspect to the sixth possible implementation of the first aspect, in a seventh possible implementation, the first end is the live wire end, the second end is the neutral wire end, the first protection branch is the live wire protection branch, the second protection branch is the neutral wire protection branch, and the first end voltage is the live wire end voltage. Alternatively, the first end is the neutral wire end, the second end is the live wire end, the first protection branch is the neutral wire protection branch, the second protection branch is the live wire protection branch, and the first end voltage is the neutral wire end voltage.

In this implementation, when the common-mode lightning current exists at the direct current end of the power conversion apparatus, the power conversion apparatus may discharge the common-mode lightning current via the direct current side protection circuit and the neutral wire protection branch or the live wire protection branch that are in the conducted state, to quickly discharge the common-mode lightning current. Because the live wire protection branch is in a disconnected state, the clamping voltage of the neutral wire end is the second voltage value, or because the neutral wire protection branch is in a disconnected state, the clamping voltage of the live wire end is the second voltage value. In addition, because an absolute value of a difference between the second voltage value and the clamping voltage of the direct current end is less than or equal to the safety error threshold (including 0), the case in which the most part of the common-mode lightning currents flow through the power conversion circuit can be avoided. This avoids damage to the power component in the power conversion circuit, and protects the power conversion apparatus, to improve stability of the power conversion apparatus.

With reference to any one of the first aspect to the seventh possible implementation of the first aspect, in an eighth possible implementation, the power conversion apparatus further includes a capacitor and a fourth protection unit. The capacitor is connected between the live wire end and the neutral wire end of the power conversion circuit. The fourth protection unit is connected to the capacitor in parallel, and is configured to be in a turn-on state when a voltage between two ends of the capacitor is greater than a third threshold.

In this implementation, in the power conversion apparatus, a protection unit is connected to the two ends of the capacitor in parallel, so that when a lightning current exists between the live wire end and the neutral wire end, the capacitor is short-circuited by the protection unit connected to the capacitor in parallel. In this way, when the lightning current flows through the inductor and the capacitor in the power conversion apparatus, the inductor and the capacitor cannot oscillate. This can avoid a failure caused by an excessively high voltage at the two ends of the capacitor, to improve stability of the power conversion apparatus.

With reference to the first aspect to the eighth possible implementation of the first aspect, in a ninth possible implementation, the power conversion apparatus further includes a first inductor, a second inductor, a fifth protection unit, and a sixth protection unit, and the alternating current end includes a live wire end and a neutral wire end. The live wire end of the power conversion circuit is connected to the live wire end of the power conversion apparatus via the first inductor, and the neutral wire end of the power conversion circuit is connected to the neutral wire end of the power conversion apparatus via the second inductor. The fifth protection unit is connected to the first inductor in parallel, and is configured to be in a turn-on state when a voltage between two ends of the first inductor is greater than a fourth threshold. The sixth protection unit is connected to the second inductor in parallel, and is configured to be in a turn-on state when a voltage between two ends of the second inductor is greater than the fourth threshold.

In this implementation, in the power conversion apparatus, a protection unit is connected to two ends of the inductor in parallel, so that when a lightning current exists between the live wire end and the neutral wire end, the inductor is short-circuited by the protection unit connected to the inductor in parallel. In this way, when the lightning current flows through the inductor and the capacitor in the power conversion apparatus, the inductor and the capacitor cannot oscillate. This can avoid a failure caused by an excessively high voltage at the two ends of the capacitor, to improve stability of the power conversion apparatus.

With reference to the eighth possible implementation of the first aspect or the ninth possible implementation of the first aspect, in a tenth possible implementation, each of the fourth protection unit, the fifth protection unit, and the sixth protection unit includes one protection element, or at least two protection elements that are connected in series or in parallel. The protection element includes a gas discharge tube, a varistor, or a transient suppression diode.

In this implementation, structures of the fourth protection unit, the fifth protection unit, and the sixth protection unit, and types of protection elements of the fourth protection unit, the fifth protection unit, and the sixth protection unit are diversified, so that diversity of the structure of the power conversion apparatus can be improved, and flexibility is high.

With reference to the second possible implementation of the first aspect or the third possible implementation of the first aspect, in an eleventh possible implementation, the power conversion apparatus further includes a second alternating current side protection circuit. The second alternating current side protection circuit is connected between the live wire end and the neutral wire end, and is configured to be in a conducted state when an alternating current end voltage between the live wire end and the neutral wire end is greater than a fifth threshold, for the alternating current end voltage to be clamped at a third voltage value. The first protection unit and the third protection unit are configured to be in the turn-on state when the alternating current end voltage is greater than a sixth threshold, for the alternating current end voltage to be clamped at a fourth voltage value, where the fourth voltage value is greater than the third voltage value, and the sixth threshold is greater than the fifth threshold.

In this implementation, because the sixth threshold is greater than the fifth threshold, when a differential-mode lightning current exists between the live wire end and the neutral wire end, the second alternating current side protection circuit is in the conducted state, and the first protection unit and the third protection unit are in a turn-off state. Because a clamping voltage (namely, the third voltage value) of the second alternating current side protection circuit is less than clamping voltages (namely, the fourth voltage value) of the first protection unit and the third protection unit, the clamping voltage of the alternating current end can be effectively reduced, and the voltage between the two ends of the capacitor can be reduced. This can avoid a failure caused by an excessively high voltage at the two ends of the capacitor, to improve stability of the power conversion apparatus.

With reference to the eleventh possible implementation of the first aspect, in a twelfth possible implementation, the second alternating current side protection circuit includes a seventh protection unit and an eighth protection unit that are connected in series. Each of the seventh protection unit and the eighth protection unit includes one protection element, or at least two protection elements that are connected in series or in parallel. The protection element includes a gas discharge tube, a varistor, or a transient suppression diode.

In this implementation, structures of the seventh protection unit and the eighth protection unit, and types of protection elements of the seventh protection unit and the eighth protection unit are diversified, so that diversity of the structure of the power conversion apparatus can be improved, and flexibility is high.

With reference to the seventh possible implementation of the first aspect, in a thirteenth possible implementation, the power conversion apparatus further includes a second alternating current side protection circuit. The second alternating current side protection circuit is connected between the live wire end and the neutral wire end, and is configured to be in the conducted state when an alternating current end voltage between the live wire end and the neutral wire end is greater than a fifth threshold. The second alternating current side protection circuit includes a seventh protection unit and an eighth protection unit that are connected in series. One of the seventh protection unit and the eighth protection unit includes a gas discharge tube, and the other protection unit includes one protection element, or at least two protection elements that are connected in series or in parallel. The protection element includes a gas discharge tube, a varistor, or a transient suppression diode.

In this implementation, because a clamping voltage of the gas discharge tube is very low and can be ignored, the power conversion apparatus can reduce the clamping voltage of the alternating current end by disposing the second alternating current side protection circuit including the gas discharge tube, to reduce a voltage between two ends of the capacitor. This can avoid a failure caused by an excessively high voltage at the two ends of the capacitor, to improve stability of the power conversion apparatus.

### BRIEF DESCRIPTION OF DRAWINGS

FIG. 1 is a schematic of a topology of a three-phase four-wire inverter in a conventional technology;
FIG. 2 is a diagram of an application scenario of a power conversion apparatus according to this application;
FIG. 3 is a schematic of a topology of a power conversion apparatus according to this application;
FIG. 4a is a schematic of another topology of a power conversion apparatus according to this application;
FIG. 4b is a schematic of another topology of a power conversion apparatus according to this application;
FIG. 4c is a schematic of another topology of a power conversion apparatus according to this application;
FIG. 4d is a schematic of another topology of a power conversion apparatus according to this application;
FIG. 4e is a schematic of another topology of a power conversion apparatus according to this application;
FIG. 4f is a schematic of another topology of a power conversion apparatus according to this application;
FIG. 4g is a schematic of another topology of a power conversion apparatus according to this application;
FIG. 4h is a schematic of another topology of a power conversion apparatus according to this application;
FIG. 5 is a schematic of another topology of a power conversion apparatus according to this application;
FIG. 6a is a schematic of another topology of a power conversion apparatus according to this application;
FIG. 6b is a schematic of another topology of a power conversion apparatus according to this application;
FIG. 6c is a schematic of another topology of a power conversion apparatus according to this application;
FIG. 6d is a schematic of another topology of a power conversion apparatus according to this application;
FIG. 6e is a schematic of another topology of a power conversion apparatus according to this application;
FIG. 6f is a schematic of another topology of a power conversion apparatus according to this application;
FIG. 6g is a schematic of another topology of a power conversion apparatus according to this application;
FIG. 6h is a schematic of another topology of a power conversion apparatus according to this application;
FIG. 6i is a schematic of another topology of a power conversion apparatus according to this application; and
FIG. 6j is a schematic of another topology of a power conversion apparatus according to this application.

### DESCRIPTION OF EMBODIMENTS

A power conversion apparatus provided in this application is applicable to a plurality of application fields such as the energy storage and power generation field, the photovoltaic power generation field, the new energy smart microgrid field, and the power transmission and distribution field. The power conversion apparatus provided in this application may be an inverter, a power conversion system (Power Conversion System, PCS), an uninterruptible power supply (Uninterruptible Power Supply, UPS), or the like, and is applicable to different application scenarios, for example, a photovoltaic power supply scenario, an energy storage power supply scenario, a photovoltaic storage hybrid power supply scenario, and a UPS power supply scenario. The following uses the photovoltaic power supply scenario as an example for description.

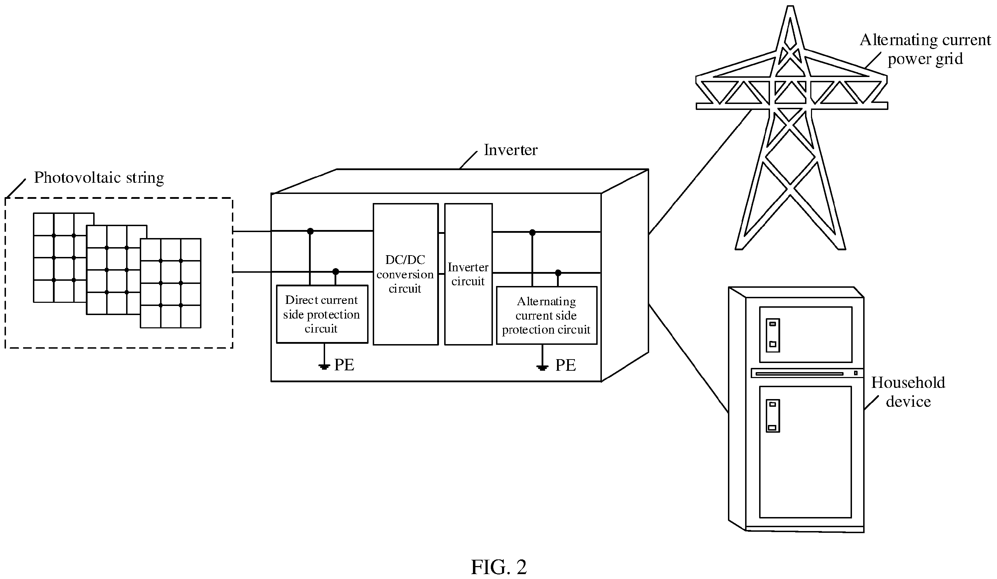

FIG. 2 is a diagram of an application scenario of a power conversion apparatus according to this application. In a photovoltaic power supply scenario, a power conversion apparatus provided in this application is an inverter shown in FIG. 2. The inverter includes a direct current end, a power conversion circuit, a direct current side protection circuit, an alternating current side protection circuit, and an alternating current end. The power conversion circuit includes a DC/DC conversion circuit and an inverter circuit. The direct current end of the inverter is connected to a photovoltaic string, and the alternating current end is connected to an alternating current load (for example, an alternating current power grid or a household device). An input end of the DC/DC conversion circuit is connected to the direct current end of the inverter, an output end of the DC/DC conversion circuit is connected to an input end of the inverter circuit, and an output end of the inverter circuit is connected to the alternating current end of the inverter. The direct current side protection circuit is connected between the direct current end of the inverter and protective earthing PE (namely, a ground or a protection ground). The alternating current side protection circuit includes a plurality of protection branches, and the plurality of protection branches are connected between the alternating current end of the inverter and the protective earthing PE.

After the inverter starts running, the DC/DC conversion circuit performs direct current conversion on a direct current generated by the photovoltaic string connected to the direct current end of the inverter, and then outputs a converted direct current to the inverter circuit. The inverter circuit inverts, into an alternating current, the direct current that is input by an input end of the inverter circuit and that is obtained through direct current conversion, and outputs the alternating current to the alternating current end of the inverter, to supply power to a plurality of types of power consumption devices such as an alternating current power grid and an alternating current load. In addition, when a common-mode lightning current exists between the direct current end of the inverter and the protective earthing PE, a direct current end voltage between the direct current end of the inverter and the protective earthing PE is greater than a first threshold, so that the direct current side protection circuit is in a conducted state, for the direct current end voltage to be clamped at a first voltage value. In this way, a part of the common-mode lightning current is discharged to the protective earthing PE via the direct current side protection circuit. In addition, when the common-mode lightning current exists between the direct current end of the inverter and the protective earthing PE, another part of the common-mode lightning current sequentially flows through the DC/DC conversion circuit and the inverter circuit, and then reaches the alternating current end of the inverter. In this case, an alternating current end voltage between the alternating current end of the inverter and the protective earthing PE is greater than a second threshold, so that at least one of the plurality of protection branches of the alternating current side protection circuit is in a conducted state, for the alternating current end voltage to be clamped at a second voltage value. In this way, the another part of the common-mode lightning current is discharged to the protective earthing PE via the alternating current side protection circuit. An absolute value of a difference between the first voltage value and the second voltage value is less than or equal to a safety error threshold.

It may be understood that, when a common-mode lightning current exists at the direct current end of the inverter, the inverter may discharge the common-mode lightning current via the direct current side protection circuit and the at least one protection branch of the alternating current side protection circuit that are in the conducted state, to quickly discharge the common-mode lightning current. Because the absolute value of the difference between the first voltage value and the second voltage value is less than or equal to the safety error threshold (including 0), in a process of discharging the common-mode lightning current, a case in which a clamping voltage of the direct current side protection circuit is greater than a clamping voltage of the alternating current side protection circuit and a most part of the common-mode lightning current flows through the power conversion circuit can be avoided. This avoids damage to a power component in the power conversion circuit and protects the inverter, to improve stability of the inverter.

The foregoing is merely an example of the application scenario of the power conversion apparatus provided in this application, but is not exhaustive. The application scenario is not limited in this application.

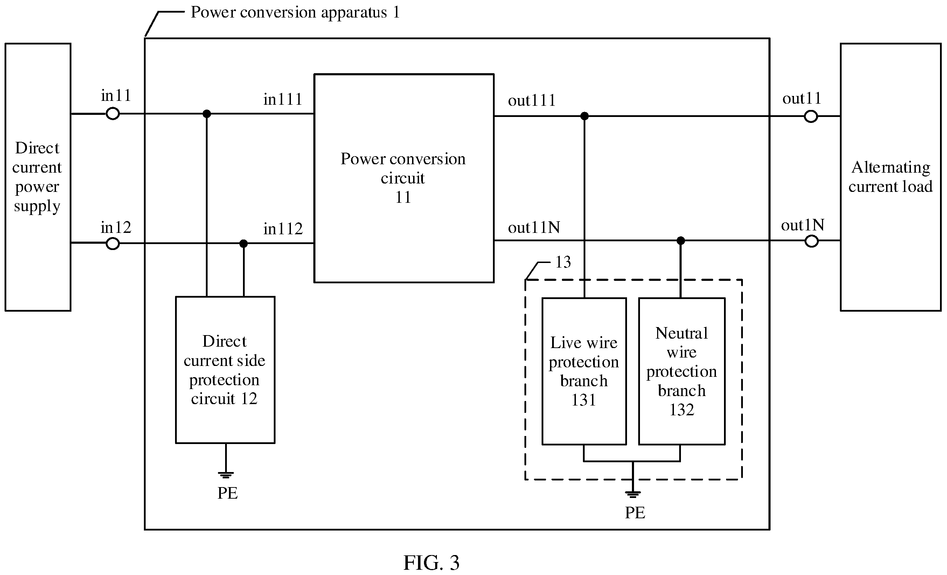

With reference to FIG. 3 to FIG. 6j, the following describes an example of a working principle of a power conversion apparatus provided in this application.

FIG. 3 is a schematic of a topology of a power conversion apparatus according to this application. As shown in FIG. 3, a power conversion apparatus 1 includes a direct current end, a power conversion circuit 11, a direct current side protection circuit 12, a first alternating current side protection circuit 13, and an alternating current end. The direct current end of the power conversion apparatus 1 includes a direct current end in11 and a direct current end in12. The direct current end in11 and the direct current end in12 are configured to respectively connect to a positive electrode and a negative electrode of a direct current power supply. The direct current power supply includes a photovoltaic module, a battery cluster, or the like. The alternating current end of the power conversion apparatus 1 includes a live wire end out11 and a neutral wire end out1N. The live wire end out11 and the neutral wire end out1N are configured to connect to an alternating current load. The alternating current load includes an alternating current power grid or an alternating current power consumption device. The power conversion circuit 11 is connected between the direct current end and the alternating current end of the power conversion apparatus 1. Specifically, a direct current end in111 and a direct current end in112 of the power conversion circuit 11 are respectively connected to the direct current end in11 and the direct current end in12 of the power conversion apparatus 1. An alternating current end (including a live wire end out111 and a neutral wire end out11N) of the power conversion circuit 11 is connected to the live wire end out11 and a neutral wire end out1N of the power conversion apparatus 1. The power conversion circuit 11 is configured to implement electric energy conversion between the direct current end and the alternating current end. For example, the power conversion circuit 11 includes a DC/AC conversion circuit, or includes a DC/DC conversion circuit and a DC/AC conversion circuit. The direct current side protection circuit 12 is connected between the direct current end of the power conversion apparatus 1 and protective earthing PE. The first alternating current side protection circuit 13 includes a plurality of protection branches, and the plurality of protection branches are connected between the alternating current end of the power conversion apparatus 1 and the protective earthing PE. Specifically, the plurality of protection branches include a live wire protection branch 131 and a neutral wire protection branch 132. The live wire protection branch 131 is connected between the live wire end out11 of the power conversion apparatus 1 and the protective earthing PE, and the neutral wire protection branch 132 is connected between the neutral wire end out1N of the power conversion apparatus 1 and the protective earthing PE.

In an implementation, after the power conversion apparatus 1 works, the power conversion circuit 11 converts a direct current output by the direct current power supply into an alternating current, and outputs the alternating current to the alternating current load, to supply power to the alternating current load. In addition, when a common-mode lightning current exists between the protective earthing PE, and the direct current end in11 and/or the direct current end in12 of the power conversion apparatus 1, a direct current end voltage between the protective earthing PE, and the direct current end in11 and/or the direct current end in12 of the power conversion apparatus 1 is greater than a first threshold, so that the direct current side protection circuit 12 is in a conducted state, for the direct current end voltage to be clamped at a first voltage value. In this way, a part of the common-mode lightning current is discharged to the protective earthing PE via the direct current side protection circuit 12. In addition, when the common-mode lightning current exists between the protective earthing PE, and the direct current end in11 and/or the direct current end in12 of the power conversion apparatus 1, another part of the common-mode lightning current flows through the power conversion circuit 11 and reaches the alternating current end of the power conversion apparatus 1. In this case, an alternating current end voltage between the alternating current end of the power conversion apparatus 1 and the protective earthing PE is greater than a second threshold, so that at least one of the live wire protection branch 131 and the neutral wire protection branch 132 is in a conducted state, for the alternating current end voltage to be clamped at a second voltage value. In this way, the another part of the common-mode lightning current is discharged to the protective earthing PE via the first alternating current side protection circuit 13. Specifically, the another part of the common-mode lightning current flows through the power conversion circuit 11 and reaches the live wire end out11 and/or the neutral wire end out1N of the power conversion apparatus 1. In this case, a live wire end voltage between the live wire end out11 of the power conversion apparatus 1 and the protective earthing PE and/or a neutral wire end voltage between the neutral wire end out1N of the power conversion apparatus 1 and the protective earthing PE are/is greater than the second threshold, so that the live wire protection branch 131 and/or the neutral wire protection branch 132 are/is in the conducted state, for the live wire end voltage and/or the neutral wire end voltage to be clamped at the second voltage value. In this way, the another part of the common mode lightning current is discharged to the protective earthing PE via the live wire protection branch 131 and/or the neutral wire protection branch 132. An absolute value of a difference between the first voltage value and the second voltage value is less than or equal to a safety error threshold. The safety error threshold is generally a difference between an upper limit value of a clamping voltage error range of the direct current side protection circuit and a lower limit value of a clamping voltage error range of the first alternating current side protection circuit. The clamping voltage error ranges of the direct current side protection circuit and the first alternating current side protection circuit each are determined by a calibrated clamping voltage and a calibrated tolerance of a protection element in the protection circuit. The tolerance is an error range between the calibrated clamping voltage and an actual clamping voltage of the protection element. For example, if the direct current side protection circuit includes a first varistor and a second varistor that are connected in series, the clamping voltage error range of the direct current side protection circuit is [V1*(1-a1%)+V2*(1-a2%), V1*(1+a1%)+V2*(1+a2%)], where V1 and V2 are respectively calibrated clamping voltages of the first varistor and the second varistor, and a1% and a2% are respectively calibrated tolerances of the first varistor and the second varistor. The first threshold is an actuating voltage threshold in a case in which the direct current side protection circuit 12 switches from a disconnected state to the conducted state, and the second threshold is an actuating voltage threshold in a case in which the live wire protection branch 131 and the neutral wire protection branch 132 switch from a disconnected state to the conducted state. In addition, a clamping voltage of a circuit in this application is a voltage value obtained after a lightning current passes through the circuit. In this application, a voltage at one end is clamped at a voltage value, that is, a clamping voltage of one end is a voltage value. Specifically, the clamping voltage is a voltage value obtained after the lightning current passes through a circuit between one end and the protective earthing. For example, that a clamping voltage of the direct current side protection circuit 12 is the first voltage value and that the direct current end voltage is clamped at the first voltage value both mean that a voltage value obtained after the lightning current passes through the direct current side protection circuit 12 is the first voltage value.

In embodiments of this application, when a common-mode lightning current exists at the direct current end of the power conversion apparatus 1, the power conversion apparatus 1 may discharge the common-mode lightning current via the direct current side protection circuit 12 and the at least one protection branch of the first alternating current side protection circuit 13 that are in the conducted state, to quickly discharge the common-mode lightning current. Because the absolute value of the difference between the first voltage value and the second voltage value is less than or equal to the safety error threshold, in a process of discharging the common-mode lightning current, a case in which the clamping voltage of the direct current side protection circuit 12 is greater than a clamping voltage of the first alternating current side protection circuit 13 and a most part of the common-mode lightning current flows through the power conversion circuit 11 can be avoided. This avoids damage to a power component in the power conversion circuit 11, and protects the power conversion apparatus 1, to improve stability of the power conversion apparatus 1.

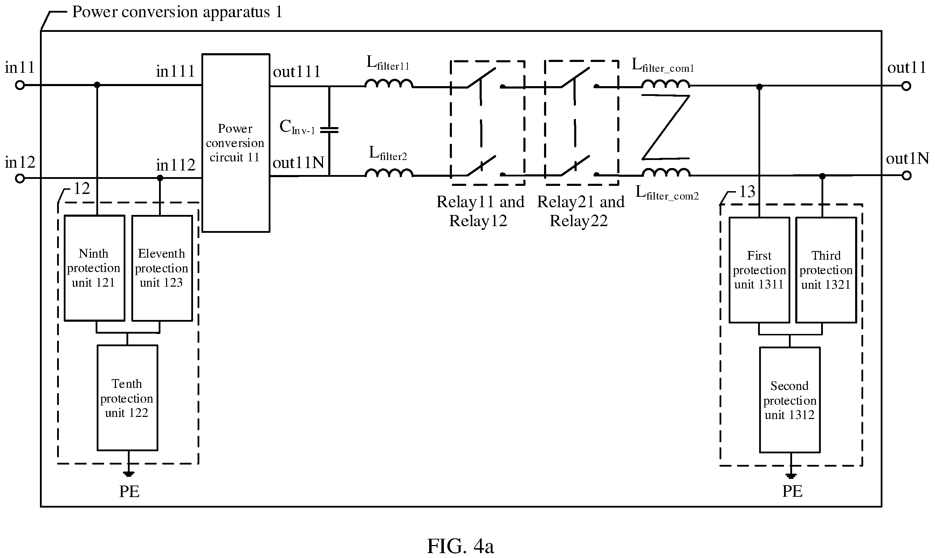

FIG. 4a is a schematic of another topology of the power conversion apparatus according to this application. As shown in FIG. 4a, the live wire protection branch 131 in FIG. 3 includes a first protection unit 1311 and a second protection unit 1312, and the neutral wire protection branch 132 in FIG. 3 includes a second protection unit 1312 and a third protection unit 1321. One end of the first protection unit 1311 and one end of the third protection unit 1321 are respectively connected to the live wire end out11 and the neutral wire end out1N of the power conversion apparatus 1. The other end of the first protection unit 1311 is connected to the other end of the third protection unit 1321 and then connected to the protective earthing PE via the second protection unit 1312. In addition, the direct current side protection circuit 12 includes a ninth protection unit 121, a tenth protection unit 122, and an eleventh protection unit 123. One end of the ninth protection unit 121 and one end of the eleventh protection unit 123 are respectively connected to the direct current end in11 and the direct current end in12 of the power conversion apparatus 1. The other end of the ninth protection unit 121 is connected to the other end of the eleventh protection unit 123 and then connected to the protective earthing PE via the tenth protection unit 122. Each protection unit of the direct current side protection circuit 12 includes one protection element, or at least two protection elements that are connected in series or in parallel. The protection element includes a gas discharge tube, a varistor, or a transient suppression diode.

In addition, the power conversion apparatus 1 further includes a capacitor C_{Inv-1}, a first inductor, and a second inductor. The capacitor C_{Inv-1} is connected between the live wire end out111 and the neutral wire end out11N of the power conversion circuit 11. The first inductor includes an inductor L_{filter11} and/or an inductor L_{filter_com1}, or the first inductor includes an integrated inductor of the inductor L_{filter11} and the inductor L_{filter_com1}. The second inductor includes an inductor L_{filter2} and/or an inductor L_{filter_com2}, or the second inductor includes an integrated inductor of the inductor L_{filter2} and the inductor L_{filter_com2}. For example, the first inductor is the inductor L_{filter11}, and the second inductor is the inductor L_{filter2}. The live wire end out111 of the power conversion circuit 11 is connected to the live wire end out11 of the power conversion apparatus 1 via the inductor L_{filter11}, and the neutral wire end out11N of the power conversion circuit 11 is connected to the neutral wire end out1N of the power conversion apparatus 1 via the inductor L_{filter2}. Optionally, the power conversion apparatus 1 further includes relays Relay11-12, and relays Relay21 and Relay22. The live wire end out111 of the power conversion circuit 11 is connected to the live wire end out11 of the power conversion apparatus 1 via the inductor L_{filter11}, the relay Relay 11, and the relay Relay21 in sequence, and the neutral wire end out11N of the power conversion circuit 11 is connected to the neutral wire end out1N of the power conversion apparatus 1 via the inductor L_{filter2}, the relay Relay12, and the relay Relay22 in sequence.

In an optional implementation, when a common-mode lightning current exists between the protective earthing PE, and the direct current end in11 and/or the direct current end in12 of the power conversion apparatus 1, a direct current end voltage between the protective earthing PE, and the direct current end in11 and/or the direct current end in12 of the power conversion apparatus 1 is greater than a first threshold, so that the direct current side protection circuit 12 is in a conducted state, for the direct current end voltage to be clamped at a first voltage value. In this way, a part of the common-mode lightning current is discharged to the protective earthing PE via the direct current side protection circuit 12. In addition, when the common-mode lightning current exists between the protective earthing PE, and the direct current end in11 and/or the direct current end in12 of the power conversion apparatus 1, another part of the common-mode lightning current sequentially flows through the power conversion circuit 11, the inductor, and the relay and reaches the live wire end out11 of the power conversion apparatus 1, and flows through the power conversion circuit 11 and reaches the neutral wire end out1N of the power conversion apparatus 1. In this case, both a live wire end voltage between the live wire end out11 of the power conversion apparatus 1 and the protective earthing PE and a neutral wire end voltage between the neutral wire end out1N of the power conversion apparatus 1 and the protective earthing PE are greater than a second threshold, so that both the live wire protection branch 131 and the neutral wire protection branch 132 are in a conducted state, for the live wire end voltage and the neutral wire end voltage to be clamped at the second voltage value. In this way, the another part of the common mode lightning current is discharged to the protective earthing PE via the live wire protection branch 131 and the neutral wire protection branch 132. An absolute value of a difference between the first voltage value and the second voltage value is less than or equal to a safety error threshold.

Specifically, when a common-mode lightning current exists at the direct current end in11 and/or the direct current end in12 of the power conversion apparatus 1, a direct current end voltage between the direct current end in11 of the power conversion apparatus 1 and the protective earthing PE and/or a direct current end voltage between the direct current end in12 of the power conversion apparatus 1 and the protective earthing PE are/is greater than the first threshold, and the ninth protection unit 121 and the tenth protection unit 122 are in a turn-on state, and/or the eleventh protection unit 123 and the tenth protection unit 122 are in a turn-on state, for the direct current end voltages to be clamped at the first voltage value. In this way, a part of the common-mode lightning current is discharged to the protective earthing PE via the ninth protection unit 121 and the tenth protection unit 122, and/or is discharged to the protective earthing PE via the eleventh protection unit 123 and the tenth protection unit 122. The first voltage value is a sum of a clamping voltage of the ninth protection unit 121 or the eleventh protection unit 123 and a clamping voltage of the tenth protection unit 122. In addition, when the common-mode lightning current exists at the direct current end in11 and/or the direct current end in12 of the power conversion apparatus 1, another part of the common-mode lightning current sequentially flows through the power conversion circuit 11, the inductor, and the relay and reaches the live wire end out11 of the power conversion apparatus 1, and flows through the power conversion circuit 11 and reaches the neutral wire end out1N of the power conversion apparatus 1. In this case, both the live wire end voltage and the neutral wire end voltage are greater than the second threshold, so that the first protection unit 1311, the second protection unit 1312, and the third protection unit 1321 are all in a turn-on state, for the live wire end voltage and the neutral wire end voltage to be clamped at the second voltage value. In this way, the another part of the common-mode lightning current is discharged to the protective earthing PE via the first protection unit 1311, the second protection unit 1312, and the third protection unit 1321, to quickly discharge the common-mode lightning current. The second voltage value is a sum of a clamping voltage of the first protection unit 1311 or the third protection unit 1321 and a clamping voltage of the second protection unit 1312. Each of the first protection unit 1311, the second protection unit 1312, and the third protection unit 1321 includes one protection element, or at least two protection elements that are connected in series or in parallel. The protection element includes a gas discharge tube, a varistor, or a transient suppression diode. Because the absolute value of the difference between the first voltage value and the second voltage value is less than or equal to the safety error threshold, in a process of discharging the common-mode lightning current, a case in which the clamping voltage of the direct current side protection circuit 12 is greater than a clamping voltage of the first alternating current side protection circuit 13 and a most part of the common-mode lightning current flows through the power conversion circuit 11 can be avoided. This avoids damage to a power component in the power conversion circuit 11, and protects the power conversion apparatus 1, to improve stability of the power conversion apparatus 1.

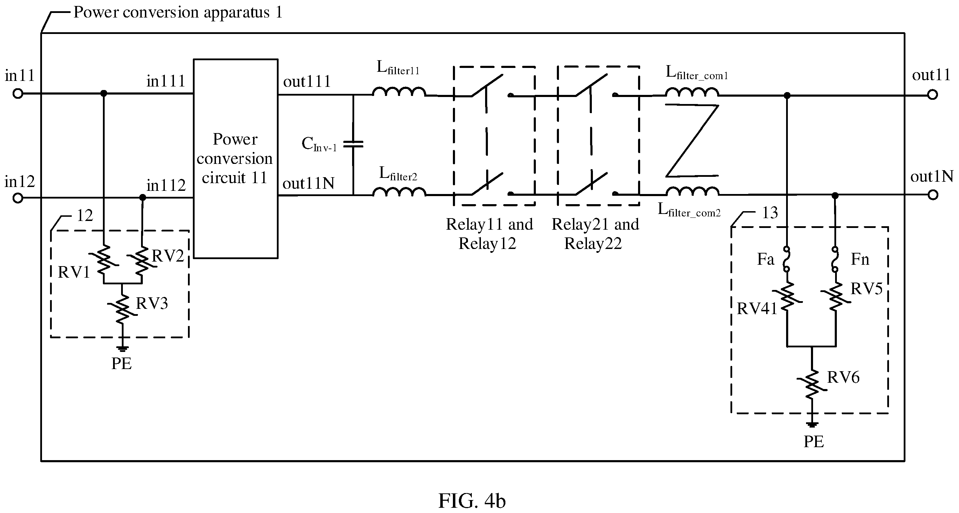

For example, each protection unit of the direct current side protection circuit 12 and the first alternating current side protection circuit 13 includes a varistor. For details, refer to the power conversion apparatus 1 shown in FIG. 4b. As shown in FIG. 4b, the first protection unit 1311 includes a varistor RV41, the second protection unit 1312 includes a varistor RV6, the third protection unit 1321 includes a varistor RV5, the ninth protection unit 121 includes a varistor RV1, the tenth protection unit 122 includes a varistor RV3, and the eleventh protection unit 123 includes a varistor RV2. Optionally, the first protection unit 1311 further includes a fuse Fa, and the fuse Fa is connected to the varistor RV41 in series. The third protection unit 1321 further includes a fuse Fn, and the fuse Fn is connected to the varistor RV6 in series.

In another optional implementation, when a common-mode lightning current exists between the protective earthing PE, and the direct current end in11 and/or the direct current end in12 of the power conversion apparatus 1, a direct current end voltage between the protective earthing PE, and the direct current end in11 and/or the direct current end in12 of the power conversion apparatus 1 is greater than a first threshold, so that the direct current side protection circuit 12 is in a conducted state, for the direct current end voltage to be clamped at a first voltage value. In this way, a part of the common-mode lightning current is discharged to the protective earthing PE via the direct current side protection circuit 12. In addition, when the common-mode lightning current exists between the protective earthing PE, and the direct current end in11 and/or the direct current end in12 of the power conversion apparatus 1, another part of the common-mode lightning current sequentially flows through the power conversion circuit 11, the inductor, and the relay and reaches the live wire end out11 and the neutral wire end out1N of the power conversion apparatus 1 (or passes through the power conversion circuit 11 and reaches the neutral wire end out1N). In this case, the neutral wire protection branch 132 is in a disconnected state, and a live wire end voltage between the live wire end out11 of the power conversion apparatus 1 and the protective earthing PE is greater than a second threshold, so that the live wire protection branch 131 is in a conducted state, for the live wire end voltage to be clamped at a second voltage value. In this way, the another part of the common-mode lightning current is discharged to the protective earthing PE via the live wire protection branch 131. An absolute value of a difference between the first voltage value and the second voltage value is less than or equal to a safety error threshold.

Specifically, when a common-mode lightning current exists at the direct current end in11 and/or the direct current end in12 of the power conversion apparatus 1, a direct current end voltage between the direct current end in11 of the power conversion apparatus 1 and the protective earthing PE and/or a direct current end voltage between the direct current end in12 of the power conversion apparatus 1 and the protective earthing PE are/is greater than the first threshold, and the ninth protection unit 121 and the tenth protection unit 122 are in a turn-on state, and/or the eleventh protection unit 123 and the tenth protection unit 122 are in a turn-on state, for the direct current end voltages to be clamped at the first voltage value. In this way, a part of the common-mode lightning current is discharged to the protective earthing PE via the ninth protection unit 121 and the tenth protection unit 122, and/or is discharged to the protective earthing PE via the eleventh protection unit 123 and the tenth protection unit 122. In addition, when the common-mode lightning current exists at the direct current end in11 and/or the direct current end in12 of the power conversion apparatus 1, another part of the common-mode lightning current sequentially flows through the power conversion circuit 11, the inductor, and the relay and reaches the live wire end out11 and the neutral wire end out1N of the power conversion apparatus 1 (or passes through the power conversion circuit 11 and reaches the neutral wire end out1N). Because a lightning current value (for example, thousands of A) is far greater than a normal operating current value (for example, dozens of A) of the power conversion apparatus 1, when the common-mode lightning current flows through the neutral wire protection branch 132, a change rate of a current flowing through the neutral wire protection branch 132 increases, so that an impedance value of the neutral wire protection branch 132 increases accordingly. In this case, the neutral wire protection branch 132 is in the disconnected state, and the live wire end voltage is greater than the second threshold. Specifically, when the common-mode lightning current flows through the third protection unit 1321, a change rate of a current flowing through the third protection unit 1321 increases, so that an impedance value of the third protection unit 1321 increases accordingly. In this case, the third protection unit 1321 is in a turn-off state, so that the neutral wire protection branch 132 is in the disconnected state, and the live wire end voltage is greater than the second threshold. When the live wire end voltage is greater than the second threshold, both the first protection unit 1311 and the second protection unit 1312 are in a turn-on state, for the live wire end voltage to be clamped at the second voltage value. In this way, the another part of the common-mode lightning current is discharged to the protective earthing PE via the first protection unit 1311 and the second protection unit 1312, to quickly discharge the common-mode lightning current. Each of the first protection unit 1311 and the second protection unit 1312 includes one protection element, or at least two protection elements that are connected in series or in parallel. The protection element includes a gas discharge tube, a varistor, or a transient suppression diode. The third protection unit 1321 includes an inductor. Because the absolute value of the difference between the first voltage value and the second voltage value is less than or equal to the safety error threshold, in a process of discharging the common-mode lightning current, a case in which the clamping voltage of the direct current side protection circuit 12 is greater than a clamping voltage of the first alternating current side protection circuit 13 and a most part of the common-mode lightning current flows through the power conversion circuit 11 can be avoided. This avoids damage to a power component in the power conversion circuit 11, and protects the power conversion apparatus 1, to improve stability of the power conversion apparatus 1.

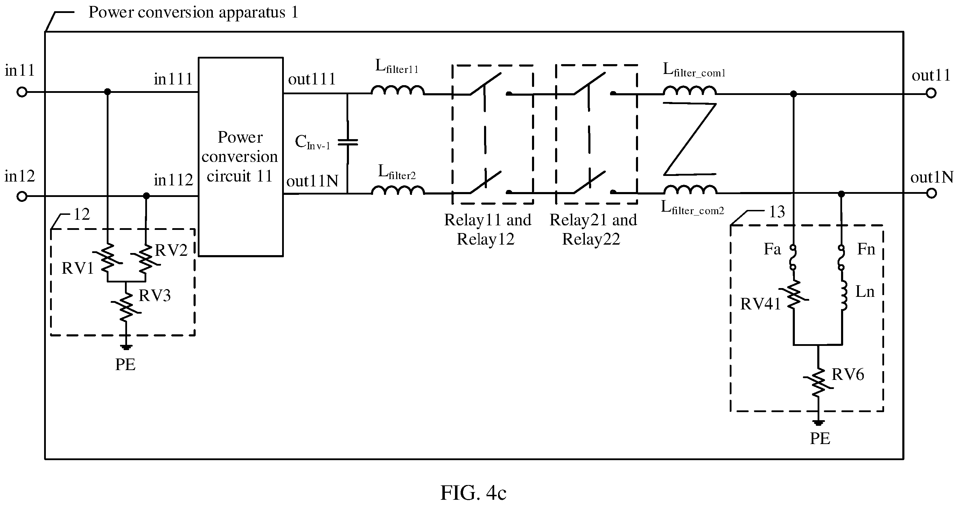

For example, each of the direct current side protection circuit 12, the first protection unit 1311, and the second protection unit 1312 includes one varistor, and the third protection unit 1321 includes an inductor. For details, refer to the power conversion apparatus 1 shown in FIG. 4c. As shown in FIG. 4c, the first protection unit 1311 includes a varistor RV41, the second protection unit 1312 includes a varistor RV6, the third protection unit 1321 includes an inductor Ln, the ninth protection unit 121 includes a varistor RV1, the tenth protection unit 122 includes a varistor RV3, and the eleventh protection unit 123 includes a varistor RV2. Optionally, the first protection unit 1311 further includes a fuse Fa, and the fuse Fa is connected to the varistor RV41 in series. The third protection unit 1321 further includes a fuse Fn, and the fuse Fn is connected to the inductor Ln in series.

In still another optional implementation, when a common-mode lightning current exists between the protective earthing PE, and the direct current end in11 and/or the direct current end in12 of the power conversion apparatus 1, a direct current end voltage between the protective earthing PE, and the direct current end in11 and/or the direct current end in12 of the power conversion apparatus 1 is greater than a first threshold, so that the direct current side protection circuit 12 is in a conducted state, for the direct current end voltage to be clamped at a first voltage value. In this way, a part of the common-mode lightning current is discharged to the protective earthing PE via the direct current side protection circuit 12. In addition, when the common-mode lightning current exists between the protective earthing PE, and the direct current end in11 and/or the direct current end in12 of the power conversion apparatus 1, another part of the common-mode lightning current sequentially flows through the power conversion circuit 11, the inductor, and the relay and reaches the live wire end out11 and the neutral wire end out1N of the power conversion apparatus 1 (or passes through the power conversion circuit 11 and reaches the neutral wire end out1N). In this case, the live wire protection branch 131 is in a disconnected state, and a neutral wire end voltage between the neutral wire end out1N of the power conversion apparatus 1 and the protective earthing PE is greater than a second threshold, so that the neutral wire protection branch 132 is in a conducted state, for the neutral wire end voltage to be clamped at a second voltage value. In this way, the another part of the common-mode lightning current is discharged to the protective earthing PE via the neutral wire protection branch 132. An absolute value of a difference between the first voltage value and the second voltage value is less than or equal to a safety error threshold.

Specifically, when a common-mode lightning current exists at the direct current end in11 and/or the direct current end in12 of the power conversion apparatus 1, a direct current end voltage between the direct current end in11 of the power conversion apparatus 1 and the protective earthing PE and/or a direct current end voltage between the direct current end in12 of the power conversion apparatus 1 and the protective earthing PE are/is greater than the first threshold, and the ninth protection unit 121 and the tenth protection unit 122 are in a turn-on state, and/or the eleventh protection unit 123 and the tenth protection unit 122 are in a turn-on state, for the direct current end voltages to be clamped at the first voltage value. In this way, a part of the common-mode lightning current is discharged to the protective earthing PE via the ninth protection unit 121 and the tenth protection unit 122, and/or is discharged to the protective earthing PE via the eleventh protection unit 123 and the tenth protection unit 122. In addition, when the common-mode lightning current exists at the direct current end in11 and/or the direct current end in12 of the power conversion apparatus 1, another part of the common-mode lightning current sequentially flows through the power conversion circuit 11, the inductor, and the relay and reaches the live wire end out11 and the neutral wire end out1N of the power conversion apparatus 1 (or passes through the power conversion circuit 11 and reaches the neutral wire end out1N). Because a lightning current value (for example, thousands of A) is far greater than a normal operating current value (for example, dozens of A) of the power conversion apparatus 1, when the common-mode lightning current flows through the live wire protection branch 131, a change rate of a current flowing through the live wire protection branch 131 increases, so that an impedance value of the live wire protection branch 131 increases accordingly. In this case, the live wire protection branch 131 is in the disconnected state, and the neutral wire end voltage is greater than the second threshold. For this implementation, positions of the first protection unit 1311 and the third protection unit 1321 in FIG. 4a are exchanged. Specifically, when the common-mode lightning current flows through the third protection unit 1321, a change rate of a current flowing through the third protection unit 1321 increases, so that an impedance value of the third protection unit 1321 increases accordingly. In this case, the third protection unit 1321 is in a turn-off state, so that the live wire protection branch 131 is in the disconnected state, and the neutral wire end voltage is greater than the second threshold. When the neutral wire end voltage is greater than the second threshold, both the first protection unit 1311 and the second protection unit 1312 are in a turn-on state, for the neutral wire end voltage to be clamped at the second voltage value. In this way, the another part of the common-mode lightning current is discharged to the protective earthing PE via the first protection unit 1311 and the second protection unit 1312, to quickly discharge the common-mode lightning current. Each of the first protection unit 1311 and the second protection unit 1312 includes one protection element, or at least two protection elements that are connected in series or in parallel. The protection element includes a gas discharge tube, a varistor, or a transient suppression diode, and the third protection unit 1321 includes an inductor. Because the absolute value of the difference between the first voltage value and the second voltage value is less than or equal to the safety error threshold, in a process of discharging the common-mode lightning current, a case in which the clamping voltage of the direct current side protection circuit 12 is greater than a clamping voltage of the first alternating current side protection circuit 13 and a most part of the common-mode lightning current flows through the power conversion circuit 11 can be avoided. This avoids damage to a power component in the power conversion circuit 11, and protects the power conversion apparatus 1, to improve stability of the power conversion apparatus 1.

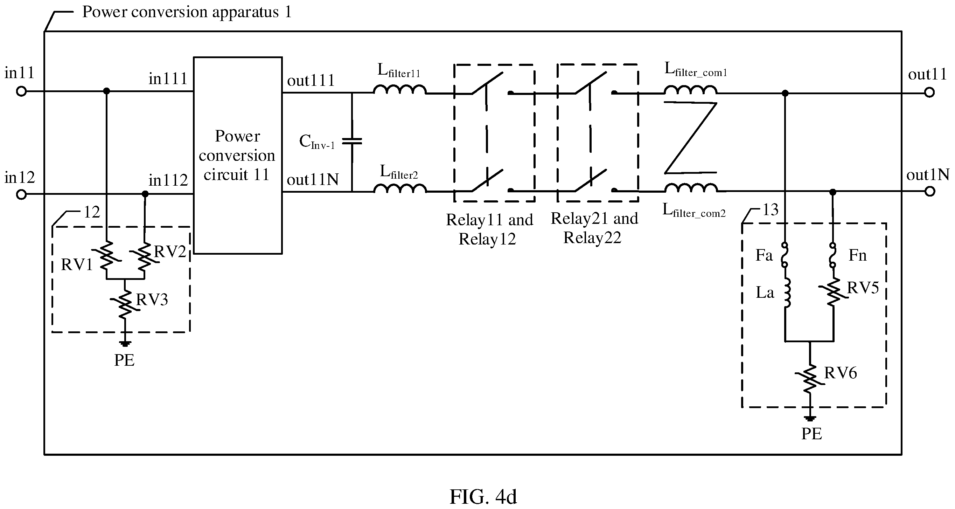

For example, each of the direct current side protection circuit 12, the first protection unit 1311, and the second protection unit 1312 includes one varistor, and the third protection unit 1321 includes an inductor. For details, refer to the power conversion apparatus 1 shown in FIG. 4d. As shown in FIG. 4d, the first protection unit 1311 includes a varistor RV5, the second protection unit 1312 includes a varistor RV6, the third protection unit 1321 includes an inductor La, the ninth protection unit 121 includes a varistor RV1, the tenth protection unit 122 includes a varistor RV3, and the eleventh protection unit 123 includes a varistor RV2. Optionally, the third protection unit 1321 further includes a fuse Fa, and the fuse Fa is connected to the inductor La in series.

In addition, when a differential-mode lightning current exists between the live wire end out11 and the neutral wire end out1N of the power conversion apparatus 1, a voltage between the live wire end out11 and the neutral wire end out1N of the power conversion apparatus 1 is greater than an actuating voltage threshold of the first protection unit 1311 and the third protection unit 1321, and the first protection unit 1311 and the third protection unit 1321 are in a turn-on state. In this case, a differential-mode lightning current loop 1 in which the differential-mode lightning current flows out from the live wire end out11, sequentially flows through the first protection unit 1311 and the third protection unit 1321, and then flows into the neutral wire end out1N is formed, and a differential-mode lightning current loop 2 in which the differential-mode lightning current flows out from the live wire end out11, sequentially flows through the inductor L_{filter_com1}, the relay, the inductor L_{filter11}, the capacitor C_{Inv-1}, the inductor L_{filter2}, the relay, and the inductor L_{filter_com2}, and then flows into the neutral wire end out1N is formed. Because the inductor and the capacitor in the differential-mode lightning current loop 2 oscillate, a voltage borne by the capacitor is excessively high, and consequently the capacitor fails.

In view of this, in the power conversion apparatus 1, protection units may further be connected to two ends of the capacitor or the inductor in parallel, so that when a lightning current exists between the live wire end out11 and the neutral wire end out1N of the power conversion apparatus 1, the capacitor or the inductor is short-circuited by the protection unit connected to the capacitor or the inductor in parallel. Alternatively, a second alternating current protection circuit may be disposed between the live wire end out11 and the neutral wire end out1N of the power conversion apparatus 1, so that a clamping voltage of the second alternating current protection circuit is low, to avoid a capacitor failure.

In an optional implementation, the power conversion apparatus 1 further includes a fourth protection unit 141, and the fourth protection unit 141 is connected to the capacitor C_{Inv-1} in parallel. The fourth protection unit 141 includes one protection element, or at least two protection elements that are connected in series or in parallel. The protection element includes a gas discharge tube, a varistor, or a transient suppression diode.

Specifically, when the differential-mode lightning current exists between the live wire end out11 and the neutral wire end out1N of the power conversion apparatus 1, a voltage between two ends of the capacitor C_{Inv-1} is greater than a third threshold. In this case, the fourth protection unit 141 is in a turn-on state, so that the capacitor C_{Inv-1} is short-circuited, and the inductor and the capacitor in the differential-mode lightning current loop 2 cannot oscillate. This can avoid a failure caused by an excessively high voltage between the two ends of the capacitor, to improve stability of the power conversion apparatus 1.

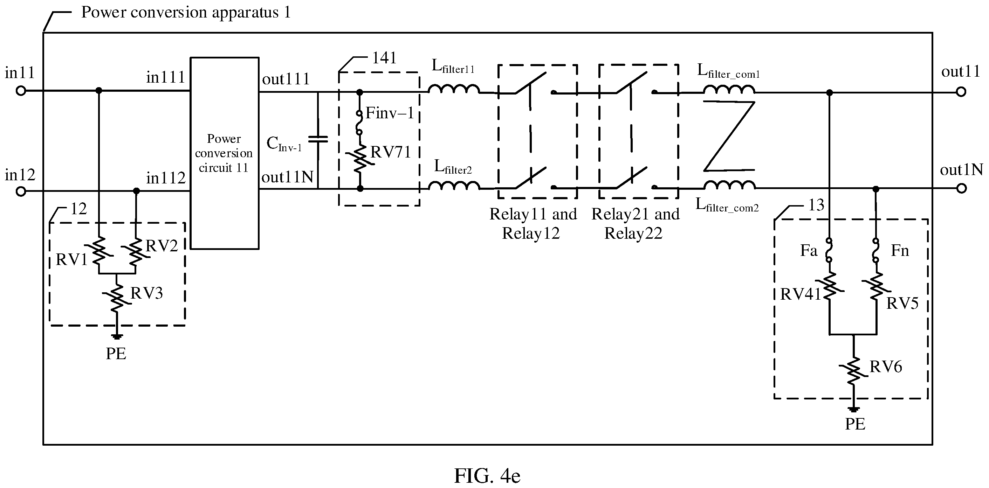

For example, as shown in FIG. 4e, the fourth protection unit 141 includes a varistor RV71. Optionally, the fourth protection unit 141 further includes a fuse Finv-1, and the fuse Finv-1 is connected to the varistor RV71 in series.

In another optional implementation, the power conversion apparatus 1 further includes a fifth protection unit 151 and a sixth protection unit 16. The fifth protection unit 151 is connected to the first inductor in parallel, and the sixth protection unit 16 is connected to the second inductor in parallel. For example, the first inductor is the inductor L_{filter11}, and the second inductor is the inductor L_{filter2}. Each of the fifth protection unit 151 and the sixth protection unit 16 includes one protection element, or at least two protection elements that are connected in series or in parallel. The protection element includes a gas discharge tube, a varistor, or a transient suppression diode.

Specifically, when the differential-mode lightning current exists between the live wire end out11 and the neutral wire end out1N of the power conversion apparatus 1, both a voltage between two ends of the inductor L_{filter11} and a voltage between two ends of the inductor L_{filter2} are greater than a fourth threshold. In this case, both the fifth protection unit 151 and the sixth protection unit 16 are in a turn-on state, so that both the inductor L_{filter11}, and the inductor L_{filter2} are short-circuited, and the inductor and the capacitor in the differential-mode lightning current loop 2 cannot oscillate. This can avoid a failure caused by an excessively high voltage between the two ends of the capacitor, and further improve stability of the power conversion apparatus 1.

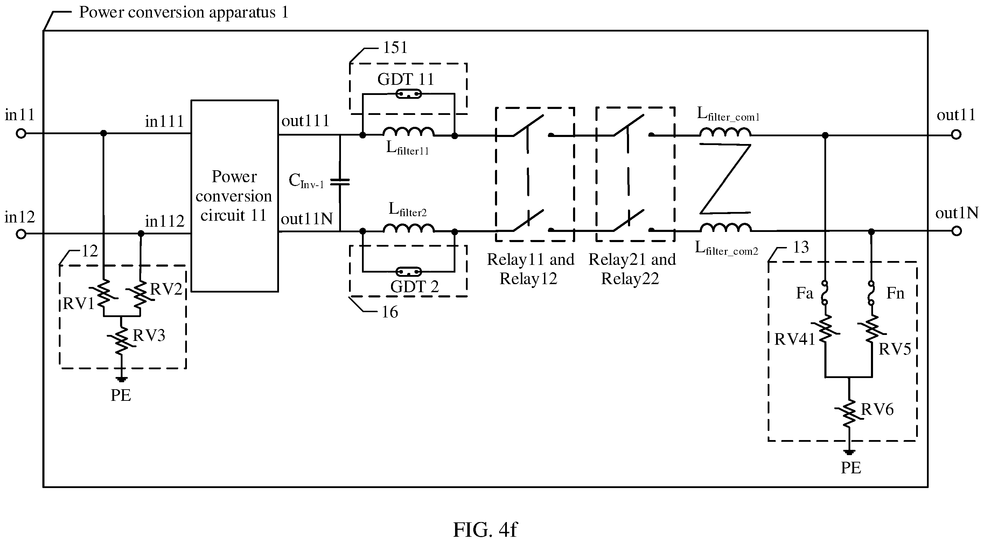

For example, as shown in FIG. 4f, the fifth protection unit 151 includes a gas discharge tube GDT 11, and the sixth protection unit 16 includes a gas discharge tube GDT 2.

In another optional implementation, the power conversion apparatus 1 further includes a second alternating current side protection circuit 171, and the second alternating current side protection circuit 171 is connected between the live wire end out11 and the neutral wire end out1N of the power conversion apparatus 1, and is configured to be in a conducted state when an alternating current end voltage between the live wire end out11 and the neutral wire end out1N of the power conversion apparatus 1 is greater than a fifth threshold, for the alternating current end voltage to be clamped at a third voltage value. The second alternating current side protection circuit 171 includes a seventh protection unit and an eighth protection unit that are connected in series, and each of the seventh protection unit and the eighth protection unit includes one protection element, or at least two protection elements that are connected in series or in parallel. The protection element includes a gas discharge tube, a varistor, or a transient suppression diode. The first protection unit 1311 and the third protection unit 1321 are configured to be in a turn-on state when the alternating current end voltage is greater than a sixth threshold, for the alternating current end voltage to be clamped at a fourth voltage value, where the fourth voltage value is greater than the third voltage value, and the sixth threshold is greater than the fifth threshold.

Specifically, when the differential-mode lightning current exists between the live wire end out11 and the neutral wire end out1N of the power conversion apparatus 1, the alternating current end voltage starts to increase. Because the fifth threshold is less than the sixth threshold, when the alternating current end voltage is greater than the fifth threshold, both the seventh protection unit and the eighth protection unit are in a turn-on state, so that the alternating current end voltage is clamped at the third voltage value, and the first protection unit 1311 and the third protection unit 1321 are short-circuited by the second alternating current side protection circuit 171 and are in a turn-off state. In this way, a part of the differential-mode lightning current is discharged via the second alternating current side protection circuit 171, and another part of the differential-mode lightning current is discharged via a loop in which the inductor and the capacitor between the live wire end out11 and the neutral wire end out1N are located. In addition, if there is no second alternating current side protection circuit 171 in the power conversion apparatus 1, when the differential-mode lightning current exists between the live wire end out11 and the neutral wire end out1N of the power conversion apparatus 1, the alternating current end voltage is greater than a sixth threshold, and both the first protection unit 1311 and the third protection unit 1321 are in the turn-on state, for the alternating current end voltage to be clamped at a fourth voltage value. In this way, a part of the differential-mode lightning current is discharged via the first protection unit 1311 and the third protection unit 1321, and another part of the differential-mode lightning current is discharged via a loop in which the inductor and the capacitor between the live wire end out11 and the neutral wire end out1N are located. Because the third voltage value is less than the fourth voltage value, the power conversion apparatus 1 may reduce a clamping voltage of the alternating current end by disposing the second alternating current side protection circuit 171, to reduce a voltage between two ends of the capacitor. This can avoid a failure caused by an excessively high voltage at the two ends of the capacitor, to improve stability of the power conversion apparatus 1.

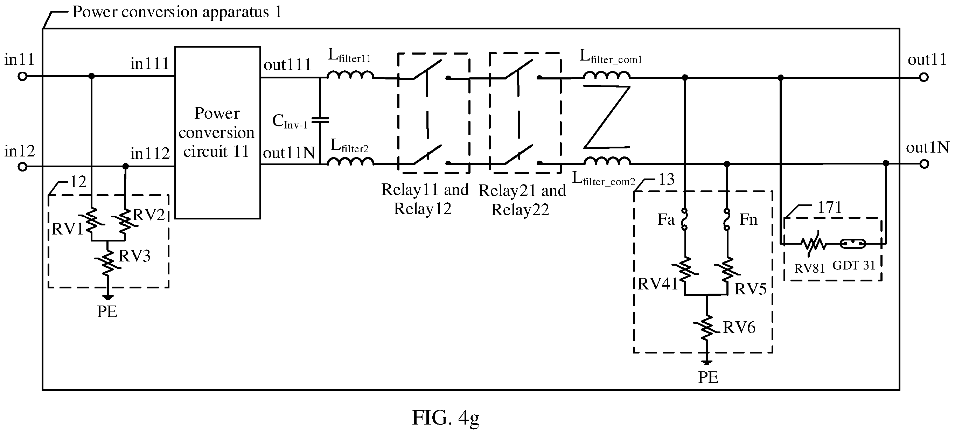

For example, as shown in FIG. 4g, the first protection unit 1311 includes a varistor RV41, the third protection unit 1321 includes a varistor RV5, the seventh protection unit includes a varistor RV81, and the eighth protection unit includes a gas discharge tube GDT 31. A sum of an actuating voltage threshold of the varistor RV41 and an actuating voltage threshold of the varistor RV5 is greater than a sum of an actuating voltage threshold of the varistor RV81 and an actuating voltage threshold of the gas discharge tube GDT 31, a sum of a clamping voltage of the varistor RV41 and a clamping voltage of the varistor RV5 is greater than a sum of a clamping voltage of the varistor RV81 and a clamping voltage of the gas discharge tube GDT 31.

In still another optional implementation, the power conversion apparatus 1 further includes a second alternating current side protection circuit 171, and the second alternating current side protection circuit 171 is connected between the live wire end out11 and the neutral wire end out1N of the power conversion apparatus 1, and is configured to be in a conducted state when an alternating current end voltage between the live wire end out11 and the neutral wire end out1N of the power conversion apparatus 1 is greater than a fifth threshold. The second alternating current side protection circuit 171 includes a seventh protection unit and an eighth protection unit that are connected in series. One of the seventh protection unit and the eighth protection unit includes a gas discharge tube, and the other protection unit includes one protection element, or at least two protection elements that are connected in series or in parallel. The protection element includes a gas discharge tube, a varistor, or a transient suppression diode.

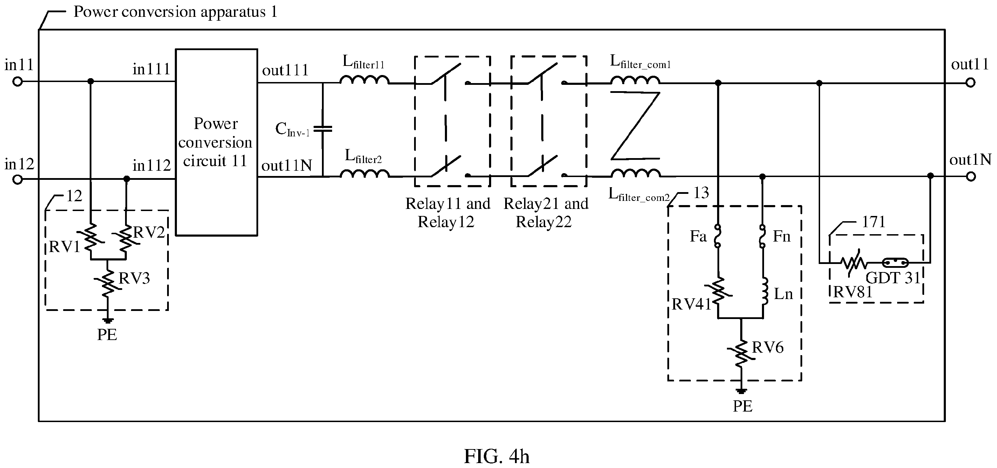

For example, as shown in FIG. 4h, the first protection unit 1311 includes a varistor RV41, the third protection unit 1321 includes an inductor Ln, the seventh protection unit includes a varistor RV81, and the eighth protection unit includes a gas discharge tube GDT 31. Specifically, when the differential-mode lightning current exists between the live wire end out11 and the neutral wire end out1N of the power conversion apparatus 1, a change rate of a current flowing through the inductor Ln increases, and an impedance value of the inductor Ln increases accordingly. In this way, a branch in which the inductor Ln and the varistor RV41 are located is in a disconnected state. When the differential-mode lightning current exists between the live wire end out11 and the neutral wire end out1N of the power conversion apparatus 1, the alternating current end voltage is greater than a fifth threshold, and both the varistor RV81 and the gas discharge tube GDT 31 are in a turn-on state. In this way, a part of the differential-mode lightning current is discharged via the second alternating current side protection circuit 171, and another part of the differential mode lightning current is discharged via a loop in which the inductor and the capacitor between the live wire end out11 and the neutral wire end out1N are located. Because a clamping voltage of the gas discharge tube is very low and can be ignored, the power conversion apparatus 1 can reduce the clamping voltage of the alternating current end by disposing the second alternating current side protection circuit 171 including the gas discharge tube, to reduce a voltage between two ends of the capacitor. This can avoid a failure caused by an excessively high voltage at the two ends of the capacitor, to improve stability of the power conversion apparatus 1.

It should be noted that, a manner of disposing the protection units at two ends of the capacitor or the inductor shown in FIG. 4e and FIG. 4f to avoid an excessively high voltage between the two ends of the capacitor is also applicable to the power conversion apparatus 1 shown in FIG. 4c and FIG. 4d. A manner of disposing the second alternating current side protection circuit 171 shown in FIG. 4h to reduce the voltage between the two ends of the capacitor is also applicable to the power conversion apparatus 1 shown in FIG. 4d.

In embodiments of this application, when the common-mode lightning current exists at the direct current end of the power conversion apparatus 1, the power conversion apparatus 1 may discharge the common-mode lightning current via the direct current side protection circuit 12, and the live wire protection branch 131 and/or the neutral wire protection branch 132 that are in the conducted state, to quickly discharge the common-mode lightning current. Because the absolute value of the difference between the first voltage value and the second voltage value is less than or equal to the safety error threshold, in a process of discharging the common-mode lightning current, a case in which the clamping voltage of the direct current side protection circuit 12 is greater than a clamping voltage of the first alternating current side protection circuit 13 and a most part of the common-mode lightning current flows through the power conversion circuit 11 can be avoided. This avoids damage to a power component in the power conversion circuit 11, and protects the power conversion apparatus 1, to improve stability of the power conversion apparatus 1. In addition, when the differential-mode lightning current exists between the live wire end out11 and the neutral wire end out1N of the power conversion apparatus 1, a protection circuit is connected between the two ends of the capacitor or the inductor in parallel, so that the inductor and the capacitor cannot oscillate, or the second alternating current side protection circuit 171 with a low clamping voltage is disposed between the live wire end out11 and the neutral wire end out1N of the power conversion apparatus 1. This can avoid a failure caused by an excessively high voltage at the two ends of the capacitor, to improve stability of the power conversion apparatus 1.

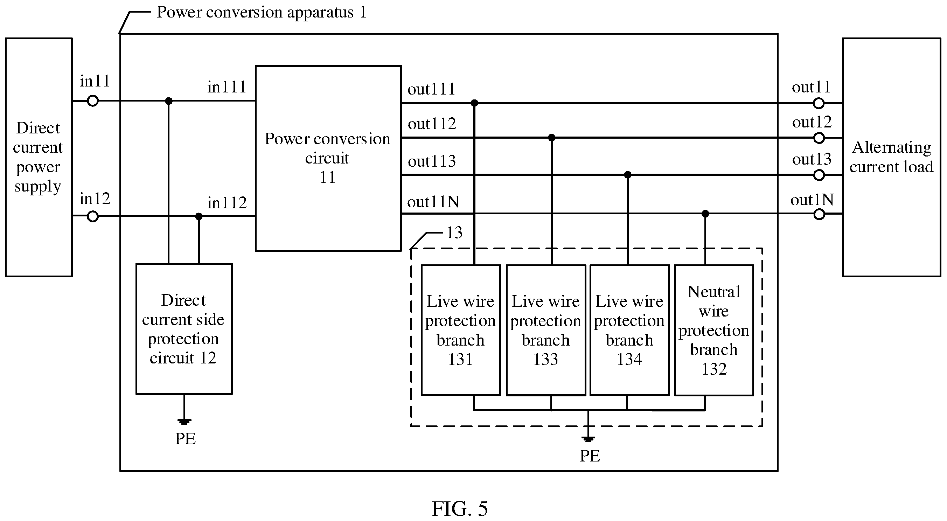

FIG. 5 is a schematic of another topology of the power conversion apparatus according to this application. As shown in FIG. 5, compared with the power conversion apparatus 1 shown in FIG. 3, the alternating current end of the power conversion apparatus 1 further includes a live wire end out12 and a live wire end out13, and the alternating current end of the power conversion circuit 11 further includes a live wire end out112 and a live wire end out113. The live wire end out112 and the live wire end out113 of the power conversion circuit 11 are respectively connected to the live wire end out12 and the live wire end out13 of the power conversion apparatus 1. In addition, the first alternating current side protection circuit 13 further includes a live wire protection branch 133 and a live wire protection branch 134. The live wire protection branch 133 is connected between the live wire end out12 of the power conversion apparatus 1 and the protective earthing PE, and the live wire protection branch 134 is connected between the live wire end out13 of the power conversion apparatus 1 and the protective earthing PE.

In an implementation, after the power conversion apparatus 1 works, the power conversion circuit 11 converts a direct current output by the direct current power supply into an alternating current, and outputs the alternating current to the alternating current load, to supply power to the alternating current load. In addition, when a common-mode lightning current exists between the protective earthing PE, and the direct current end in11 and/or the direct current end in12 of the power conversion apparatus 1, a direct current end voltage between the protective earthing PE, and the direct current end in11 and/or the direct current end in12 of the power conversion apparatus 1 is greater than a first threshold, so that the direct current side protection circuit 12 is in a conducted state, for the direct current end voltage to be clamped at a first voltage value. In this way, a part of the common-mode lightning current is discharged to the protective earthing PE via the direct current side protection circuit 12. In addition, when the common-mode lightning current exists between the protective earthing PE, and the direct current end in11 and/or the direct current end in12 of the power conversion apparatus 1, another part of the common-mode lightning current flows through the power conversion circuit 11 and reaches the alternating current end of the power conversion apparatus 1. In this case, an alternating current end voltage between the alternating current end of the power conversion apparatus 1 and the protective earthing PE is greater than a second threshold, so that at least one of the live wire protection branch (including the live wire protection branch 131, the live wire protection branch 133, and the live wire protection branch 134) and/or the neutral wire protection branch 132 of the first alternating current side protection circuit 13 is in a conducted state, for the alternating current end voltage to be clamped at a second voltage value. In this way, the another part of the common-mode lightning current is discharged to the protective earthing PE via the first alternating current side protection circuit 13. Specifically, the another part of the common-mode lightning current flows through the power conversion circuit 11 and reaches the live wire end (including the live wire ends out11 to out13) and/or the neutral wire end out1N of the power conversion apparatus 1. In this case, a live wire end voltage between the live wire end of the power conversion apparatus 1 and the protective earthing PE and/or a neutral wire end voltage between the neutral wire end out1N of the power conversion apparatus 1 and the protective earthing PE are/is greater than the second threshold, so that the live wire protection branch and/or the neutral wire protection branch 132 are/is in the conducted state, for the live wire end voltage and/or the neutral wire end voltage to be clamped at the second voltage value. In this way, the another part of the common mode lightning current is discharged to the protective earthing PE via the live wire protection branch and/or the neutral wire protection branch 132. An absolute value of a difference between the first voltage value and the second voltage value is less than or equal to a safety error threshold.

In embodiments of this application, when a common-mode lightning current exists at the direct current end of the power conversion apparatus 1, the power conversion apparatus 1 may discharge the common-mode lightning current via the direct current side protection circuit 12, and the live wire protection branch and/or the neutral wire protection branch of the first alternating current side protection circuit 13 that are in the conducted state, to quickly discharge the common-mode lightning current. Because the absolute value of the difference between the first voltage value and the second voltage value is less than or equal to the safety error threshold, in a process of discharging the common-mode lightning current, a case in which the clamping voltage of the direct current side protection circuit 12 is greater than a clamping voltage of the first alternating current side protection circuit 13 and a most part of the common-mode lightning current flows through the power conversion circuit 11 can be avoided. This avoids damage to a power component in the power conversion circuit 11, and protects the power conversion apparatus 1, to improve stability of the power conversion apparatus 1. In addition, the power conversion apparatus 1 provided in this application is not only applicable to a single-phase power conversion apparatus, but also applicable to a three-phase power conversion apparatus, and has high applicability.

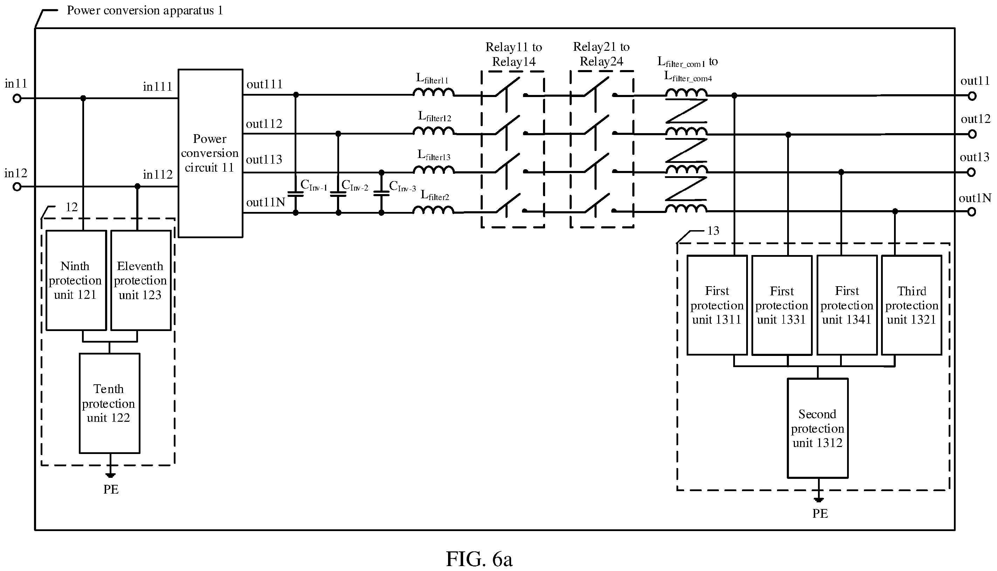

FIG. 6a is a schematic of another topology of the power conversion apparatus according to this application. As shown in FIG. 6a, the live wire protection branch 131 in FIG. 5 includes a first protection unit 1311 and a second protection unit 1312, the live wire protection branch 133 in FIG. 5 includes a first protection unit 1331 and a second protection unit 1312, the live wire protection branch 134 in FIG. 5 includes a first protection unit 1341 and a second protection unit 1312, and the neutral wire protection branch 132 in FIG. 5 includes a third protection unit 1321 and a second protection unit 1312. One end of the first protection unit 1311, one end of the first protection unit 1331, one end of the first protection unit 1341, and one end of the third protection unit 1321 are respectively connected to the **live wire** end out11, the live wire end out12, the live wire end out13, and the neutral wire end out1N of the power conversion apparatus 1. The other end of the first protection unit 1311, the other end of the first protection unit 1331, the other end of the first protection unit 1341, and the other end of the third protection unit 1321 are connected and then connected to the protective earthing PE via the second protection unit 1312.

In addition, the power conversion apparatus 1 further includes a capacitor C_{Inv-1}, a capacitor C_{Inv-2}, a capacitor C_{Inv-3}, a first inductor, and a second inductor. The capacitor C_{Inv-1} is connected between the live wire end out111 and the neutral wire end out11N of the power conversion circuit 11. The capacitor C_{Inv-2} is connected between the live wire end out112 and the neutral wire end out11N of the power conversion circuit 11. The capacitor C_{Inv-3} is connected between the live wire end out113 and the neutral wire end out11N of the power conversion circuit 11. The first inductor includes inductors L_{filter11-13} and/or inductors L_{filter_com1-3}, or the first inductor includes an integrated inductor of the inductor L_{filter11} and the inductor L_{filter_com1}, an integrated inductor of the inductor L_{filter12} and the inductor L_{filter_com2}, and an integrated inductor of the inductor L_{filter13} and the inductor L_{filter_com3}. The second inductor includes an inductor L_{filter2} and/or an inductor L_{filter_com4}, or the second inductor includes an integrated inductor of the inductor L_{filter2} and the inductor L_{filter_com4}. For example, the first inductor is the inductors L_{filter11-13}, and the second inductor is the inductor L_{filter2}. The live wire end out111 of the power conversion circuit 11 is connected to the live wire end out11 of the power conversion apparatus 1 via the inductor L_{filter11}, the live wire end out112 of the power conversion circuit 11 is connected to the live wire end out12 of the power conversion apparatus 1 via the inductor L_{filter12}, the live wire end out113 of the power conversion circuit 11 is connected to the live wire end out13 of the power conversion apparatus 1 via the inductor L_{filter13}, and the neutral wire end out11N of the power conversion circuit 11 is connected to the neutral wire end out1N of the power conversion apparatus 1 via the inductor L_{filter2}. Optionally, the power conversion apparatus 1 further includes relays Relay11 to Relay14 and relays Relay21 to Relay24. The live wire end out111 of the power conversion circuit 11 is connected to the live wire end out11 of the power conversion apparatus 1 via the inductor L_{filter11}, the relay Relay11, and the relay Relay21 in sequence. The live wire end out112 of the power conversion circuit 11 is connected to the live wire end out12 of the power conversion apparatus 1 via the inductor L_{filter12}, the relay Relay12, and the relay Relay22 in sequence. The live wire end out113 of the power conversion circuit 11 is connected to the live wire end out13 of the power conversion apparatus 1 via the inductor L_{filter13}, the relay Relay13, and the relay Relay23 in sequence. The neutral wire end out11N of the power conversion circuit 11 is connected to the neutral wire end out1N of the power conversion apparatus 1 via the inductor L_{filter2}, the relay Relay14, and the relay Relay24 in sequence.

In an optional implementation, when a common-mode lightning current exists between the protective earthing PE, and the direct current end in11 and/or the direct current end in12 of the power conversion apparatus 1, a direct current end voltage between the protective earthing PE, and the direct current end in11 and/or the direct current end in12 of the power conversion apparatus 1 is greater than a first threshold, so that the direct current side protection circuit 12 is in a conducted state, for the direct current end voltage to be clamped at a first voltage value. In this way, a part of the common-mode lightning current is discharged to the protective earthing PE via the direct current side protection circuit 12. In addition, when the common-mode lightning current exists between the protective earthing PE, and the direct current end in11 and/or the direct current end in12 of the power conversion apparatus 1, another part of the common-mode lightning current sequentially flows through the power conversion circuit 11, the inductor, and the relay and reaches the live wire end out11, the live wire end out12, the live wire end out13, and the neutral wire end out1N of the power conversion apparatus 1 (or passes through the power conversion circuit 11 and reaches the neutral wire end out1N). In this case, a live wire end voltage between the live wire end out11 of the power conversion apparatus 1 and the protective earthing PE, a live wire end voltage between the live wire end out12 of the power conversion apparatus 1 and the protective earthing PE, a live wire end voltage between the live wire end out13 of the power conversion apparatus 1 and the protective earthing PE, and a neutral wire end voltage between the neutral wire end out1N of the power conversion apparatus 1 and the protective earthing PE are all greater than a second threshold, so that the live wire protection branch 131, the live wire protection branch 133, the live wire protection branch 134, and the neutral wire protection branch 132 are all in a conducted state, for the live wire end voltages and the neutral wire end voltage to clamp a second voltage value. In this way, the another part of the common-mode lightning current is discharged to the protective earthing PE via the live wire protection branch 131, the live wire protection branch 133, the live wire protection branch 134, and the neutral wire protection branch 132. An absolute value of a difference between the first voltage value and the second voltage value is less than or equal to a safety error threshold.

Specifically, when a common-mode lightning current exists at the direct current end in11 and/or the direct current end in12 of the power conversion apparatus 1, a direct current end voltage between the direct current end in11 of the power conversion apparatus 1 and the protective earthing PE and/or a direct current end voltage between the direct current end in12 of the power conversion apparatus 1 and the protective earthing PE are/is greater than the first threshold, and the ninth protection unit 121 and the tenth protection unit 122 are in a turn-on state, and/or the eleventh protection unit 123 and the tenth protection unit 122 are in a turn-on state. In this way, a part of the common-mode lightning current is discharged to the protective earthing PE via the ninth protection unit 121 and the tenth protection unit 122, and/or is discharged to the protective earthing PE via the eleventh protection unit 123 and the tenth protection unit 122. In addition, when the common-mode lightning current exists at the direct current end in11 and/or the direct current end in12 of the power conversion apparatus 1, another part of the common-mode lightning current sequentially flows through the power conversion circuit 11, the inductor, and the relay and reaches the live wire end out11, the live wire end out12, the live wire end out13, and the neutral wire end out1N of the power conversion apparatus 1 (or passes through the power conversion circuit 11 and reaches the neutral wire end out1N). In this case, a live wire end voltage and a neutral wire end voltage are both greater than the second threshold, so that the first protection unit 1311, the first protection unit 1331, the first protection unit 1341, the second protection unit 1312, and the third protection unit 1321 are all in a turn-on state, for the live wire end voltage and the neutral wire end voltage to be clamped at the second voltage value. In this way, the another part of the common-mode lightning current is discharged to the protective earthing PE via the first protection unit 1311, the first protection unit 1331, the first protection unit 1341, the second protection unit 1312, and the third protection unit 1321, to quickly discharge the common-mode lightning current. Each of the first protection unit 1311, the first protection unit 1331, the first protection unit 1341, the second protection unit 1312, and the third protection unit 1321 includes one protection element, or at least two protection elements that are connected in series or in parallel. The protection element includes a gas discharge tube, a varistor, or a transient suppression diode. Because the absolute value of the difference between the first voltage value and the second voltage value is less than or equal to the safety error threshold, in a process of discharging the common-mode lightning current, a case in which the clamping voltage of the direct current side protection circuit 12 is greater than a clamping voltage of the first alternating current side protection circuit 13 and a most part of the common-mode lightning current flows through the power conversion circuit 11 can be avoided. This avoids damage to a power component in the power conversion circuit 11, and protects the power conversion apparatus 1, to improve stability of the power conversion apparatus 1.

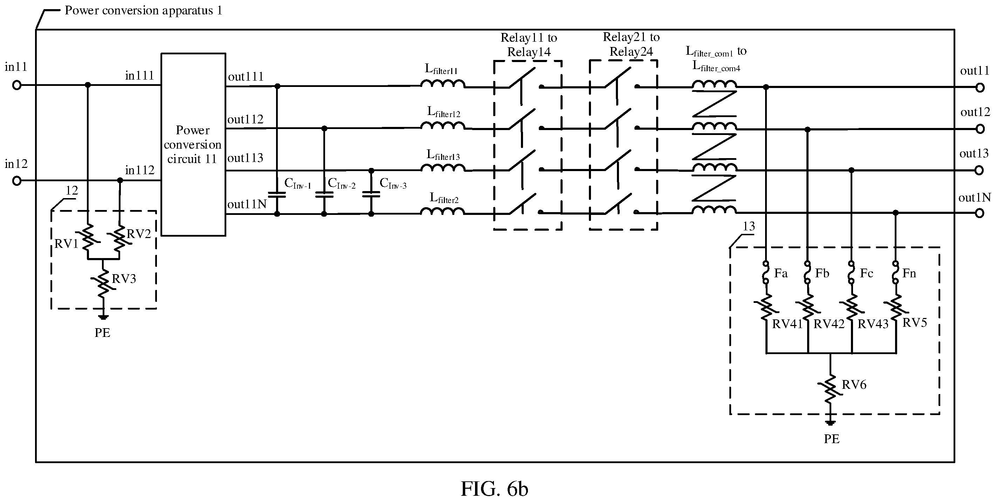

For example, each protection unit of the direct current side protection circuit 12 and the first alternating current side protection circuit 13 includes a varistor. For details, refer to the power conversion apparatus 1 shown in FIG. 6b. As shown in FIG. 6b, the first protection unit 1311 includes a varistor RV41, the first protection unit 1331 includes a varistor RV42, the first protection unit 1341 includes a varistor RV43, the second protection unit 1312 includes a varistor RV6, and the third protection unit 1321 includes a varistor RV5. Optionally, the first protection unit 1311 further includes a fuse Fa, and the fuse Fa is connected to the varistor RV41 in series. The third protection unit 1321 further includes a fuse Fn, and the fuse Fn is connected to the varistor RV6 in series. The ninth protection unit 121 includes a varistor RV1, the tenth protection unit 122 includes a varistor RV3, and the eleventh protection unit 123 includes a varistor RV2.

In another optional implementation, when a common-mode lightning current exists between the protective earthing PE, and the direct current end in11 and/or the direct current end in12 of the power conversion apparatus 1, a direct current end voltage between the protective earthing PE, and the direct current end in11 and/or the direct current end in12 of the power conversion apparatus 1 is greater than a first threshold, so that the direct current side protection circuit 12 is in a conducted state, for the direct current end voltage to be clamped at a first voltage value. In this way, a part of the common-mode lightning current is discharged to the protective earthing PE via the direct current side protection circuit 12. In addition, when the common-mode lightning current exists between the protective earthing PE, and the direct current end in11 and/or the direct current end in12 of the power conversion apparatus 1, another part of the common-mode lightning current sequentially flows through the power conversion circuit 11, the inductor, and the relay and reaches the live wire end out11, the live wire end out12, the live wire end out13, and the neutral wire end out1N of the power conversion apparatus 1 (or passes through the power conversion circuit 11 and reaches the neutral wire end out1N), so that the neutral wire protection branch 132 is in a disconnected state. In this case, a live wire end voltage between the live wire end out11 of the power conversion apparatus 1 and the protective earthing PE, a live wire end voltage between the live wire end out12 of the power conversion apparatus 1 and the protective earthing PE, and a live wire end voltage between the live wire end out13 of the power conversion apparatus 1 and the protective earthing PE are all greater than a second threshold, so that the live wire protection branch 131, the live wire protection branch 133, and the live wire protection branch 134 are all in a conducted state, for the live wire end voltages to be clamped at a second voltage value. In this way, the another part of the common-mode lightning current is discharged to the protective earthing PE via the live wire protection branch 131, the live wire protection branch 133, and the live wire protection branch 134. An absolute value of a difference between the first voltage value and the second voltage value is less than or equal to a safety error threshold.

Specifically, when a common-mode lightning current exists at the direct current end in11 and/or the direct current end in12 of the power conversion apparatus 1, a direct current end voltage between the direct current end in11 of the power conversion apparatus 1 and the protective earthing PE and/or a direct current end voltage between the direct current end in12 of the power conversion apparatus 1 and the protective earthing PE are/is greater than the first threshold, and the ninth protection unit 121 and the tenth protection unit 122 are in a turn-on state, and/or the eleventh protection unit 123 and the tenth protection unit 122 are in a turn-on state. In this way, a part of the common-mode lightning current is discharged to the protective earthing PE via the ninth protection unit 121 and the tenth protection unit 122, and/or is discharged to the protective earthing PE via the eleventh protection unit 123 and the tenth protection unit 122. In addition, when the common-mode lightning current exists at the direct current end in11 and/or the direct current end in12 of the power conversion apparatus 1, another part of the common-mode lightning current sequentially flows through the power conversion circuit 11, the inductor, and the relay and reaches the live wire end out11, the live wire end out12, the live wire end out13, and the neutral wire end out1N of the power conversion apparatus 1 (or passes through the power conversion circuit 11 and reaches the neutral wire end out1N). Because a lightning current value (for example, thousands of A) is far greater than a normal operating current value (for example, dozens of A) of the power conversion apparatus 1, when the common-mode lightning current flows through the neutral wire protection branch 132, a change rate of a current flowing through the neutral wire protection branch 132 increases, so that an impedance value of the neutral wire protection branch 132 increases accordingly. In this case, the neutral wire protection branch 132 is in the disconnected state, and the three live wire end voltages are all greater than the second threshold. Specifically, when the common-mode lightning current flows through the third protection unit 1321, a change rate of a current flowing through the third protection unit 1321 increases, so that an impedance value of the third protection unit 1321 increases accordingly. In this case, the third protection unit 1321 is in a turn-off state, so that the neutral wire protection branch 132 is in the disconnected state, and the three live wire end voltages are all greater than the second threshold. When the three live wire end voltages are all greater than the second threshold, the first protection unit 1311, the first protection unit 1331, the first protection unit 1341, and the second protection unit 1312 are all in a turn-on state, for the three live wire end voltages to be clamped at the second voltage value. In this way, the another part of the common-mode lightning current is discharged to the protective earthing PE via the first protection unit 1311, the first protection unit 1331, the first protection unit 1341, and the second protection unit 1312, to quickly discharge the common-mode lightning current. Each of the first protection unit 1311, the first protection unit 1331, the first protection unit 1341, and the second protection unit 1312 includes one protection element, or at least two protection elements that are connected in series or in parallel. The protection element includes a gas discharge tube, a varistor, or a transient suppression diode. The third protection unit 1321 includes an inductor. Because the absolute value of the difference between the first voltage value and the second voltage value is less than or equal to the safety error threshold, in a process of discharging the common-mode lightning current, a case in which the clamping voltage of the direct current side protection circuit 12 is greater than a clamping voltage of the first alternating current side protection circuit 13 and a most part of the common-mode lightning current flows through the power conversion circuit 11 can be avoided. This avoids damage to a power component in the power conversion circuit 11, and protects the power conversion apparatus 1, to improve stability of the power conversion apparatus 1.

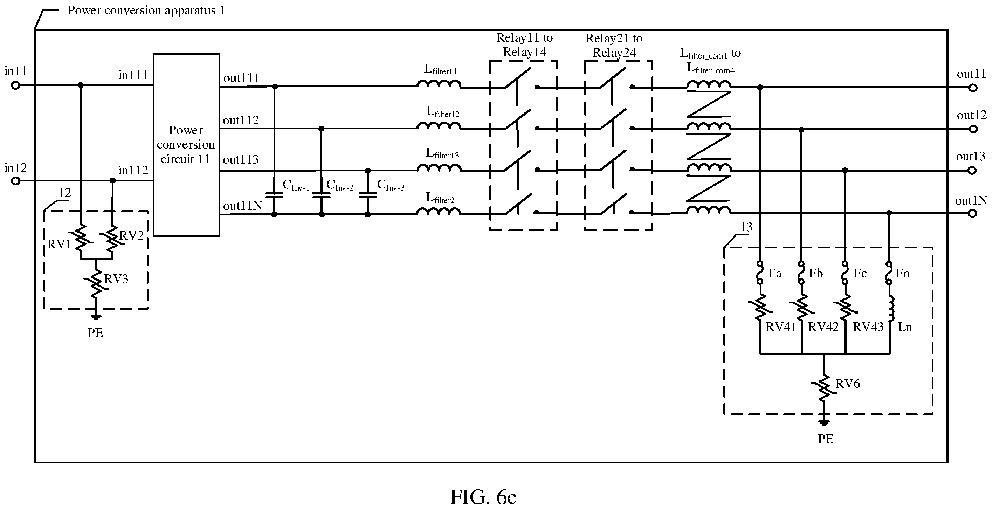

For example, each of the direct current side protection circuit 12, the first protection unit 1311, the first protection unit 1331, the first protection unit 1341, and the second protection unit 1312 includes one varistor, and the third protection unit 1321 includes an inductor. For details, refer to the power conversion apparatus 1 shown in FIG. 6c. As shown in FIG. 6c, the first protection unit 1311 includes a varistor RV41, the first protection unit 1331 includes a varistor RV42, the first protection unit 1341 includes a varistor RV43, the second protection unit 1312 includes a varistor RV6, and the third protection unit 1321 includes an inductor Ln. Optionally, the first protection unit 1311 further includes a fuse Fa, and the fuse Fa is connected to the varistor RV41 in series. The first protection unit 1331 further includes a fuse Fb, and the fuse Fb is connected to the varistor RV42 in series. The first protection unit 1341 further includes a fuse Fc, and the fuse Fc is connected to the varistor RV43 in series. The third protection unit 1321 further includes a fuse Fn, and the fuse Fn is connected to the inductor Ln in series. The ninth protection unit 121 includes a varistor RV1, the tenth protection unit 122 includes a varistor RV3, and the eleventh protection unit 123 includes a varistor RV2.

In still another optional implementation, when a common-mode lightning current exists between the protective earthing PE, and the direct current end in11 and/or the direct current end in12 of the power conversion apparatus 1, a direct current end voltage between the protective earthing PE, and the direct current end in11 and/or the direct current end in12 of the power conversion apparatus 1 is greater than a first threshold, so that the direct current side protection circuit 12 is in a conducted state, for the direct current end voltage to be clamped at a first voltage value. In this way, a part of the common-mode lightning current is discharged to the protective earthing PE via the direct current side protection circuit 12. In addition, when the common-mode lightning current exists between the protective earthing PE, and the direct current end in11 and/or the direct current end in12 of the power conversion apparatus 1, another part of the common-mode lightning current sequentially flows through the power conversion circuit 11, the inductor, and the relay and reaches the live wire end out11, the live wire end out12, the live wire end out13, and the neutral wire end out1N of the power conversion apparatus 1 (or passes through the power conversion circuit 11 and reaches the neutral wire end out1N). In this case, the live wire protection branch 131, the live wire protection branch 133, and the live wire protection branch 134 are all in a disconnected state, and a neutral wire end voltage between the neutral wire end out1N of the power conversion apparatus 1 and the protective earthing PE is greater than a second threshold, so that the neutral wire protection branch 132 is in a conducted state, for the neutral wire end voltage to be clamped at a second voltage value. In this way, the another part of the common-mode lightning current is discharged to the protective earthing PE via the neutral wire protection branch 132. An absolute value of a difference between the first voltage value and the second voltage value is less than or equal to a safety error threshold.

Specifically, when a common-mode lightning current exists at the direct current end in11 and/or the direct current end in12 of the power conversion apparatus 1, a direct current end voltage between the direct current end in11 of the power conversion apparatus 1 and the protective earthing PE and/or a direct current end voltage between the direct current end in12 of the power conversion apparatus 1 and the protective earthing PE are/is greater than the first threshold, and the ninth protection unit 121 and the tenth protection unit 122 are in a turn-on state, and/or the eleventh protection unit 123 and the tenth protection unit 122 are in a turn-on state. In this way, a part of the common-mode lightning current is discharged to the protective earthing PE via the ninth protection unit 121 and the tenth protection unit 122, and/or is discharged to the protective earthing PE via the eleventh protection unit 123 and the tenth protection unit 122. In addition, when the common-mode lightning current exists at the direct current end in11 and/or the direct current end in12 of the power conversion apparatus 1, another part of the common-mode lightning current sequentially flows through the power conversion circuit 11, the inductor, and the relay and reaches the live wire end out11, the live wire end out12, the live wire end out13, and the neutral wire end out1N of the power conversion apparatus 1 (or passes through the power conversion circuit 11 and reaches the neutral wire end out1N). Because a lightning current value (for example, thousands of A) is far greater than a normal operating current value (for example, dozens of A) of the power conversion apparatus 1, when the common-mode lightning current flows through the live wire protection branch 131, the live wire protection branch 133, and the live wire protection branch 134, a change rate of a current flowing through the three live wire protection branches increases, so that impedance values of the three live wire protection branches increase accordingly. In this case, the live wire protection branch 131, the live wire protection branch 133, and the live wire protection branch 134 are in the disconnected state, and the neutral wire end voltage is greater than the second threshold. In this implementation, positions of the first protection unit and the third protection unit in FIG. 6a are exchanged. In other words, the three live wire protection branches include third protection units, and the neutral wire protection branch 132 includes the first protection unit. Specifically, when the common-mode lightning current flow passes through the third protection units in the three live wire protection branches, a change rate of a current flowing through the third protection units in the three live wire protection branches increases, so that impedance values of the third protection units in the three live wire protection branches increase accordingly. In this case, the third protection units in the three live wire protection branches are all in a disconnected state, so that the live wire protection branch 131, the live wire protection branch 133, and the live wire protection branch 134 are in the disconnected state, and the neutral wire end voltage is greater than the second threshold. When the neutral wire end voltage is greater than the second threshold, both the first protection unit and the second protection unit 1312 are in a turn-on state, for the neutral wire end voltage to be clamped at the second voltage value. In this way, the another part of the common-mode lightning current is discharged to the protective earthing PE via the first protection unit and the second protection unit 1312, to quickly discharge the common-mode lightning current. The third protection units in the three live wire protection branches each include an inductor, and each protection unit in the first protection unit and the second protection unit 1312 includes one protection element, or at least two protection elements that are connected in series or in parallel. The protection element includes a gas discharge tube, a varistor, or a transient suppression diode. Because the absolute value of the difference between the first voltage value and the second voltage value is less than or equal to the safety error threshold, in a process of discharging the common-mode lightning current, a case in which the clamping voltage of the direct current side protection circuit 12 is greater than a clamping voltage of the first alternating current side protection circuit 13 and a most part of the common-mode lightning current flows through the power conversion circuit 11 can be avoided. This avoids damage to a power component in the power conversion circuit 11, and protects the power conversion apparatus 1, to improve stability of the power conversion apparatus 1.

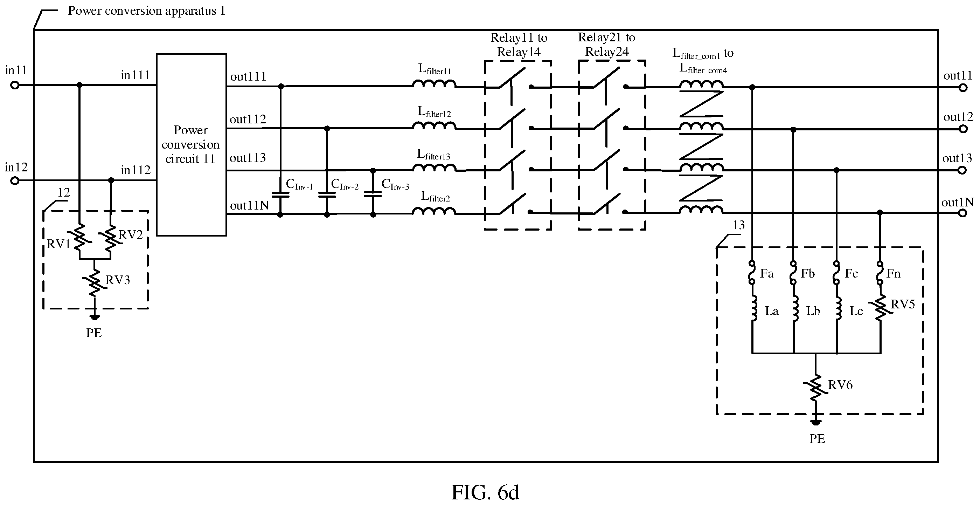

For example, each of the direct current side protection circuit 12, the first protection unit, and the second protection unit 1312 includes one varistor, and the third protection units in the three live wire protection branches each include an inductor. For details, refer to the power conversion apparatus 1 shown in FIG. 6d. As shown in FIG. 6d, the third protection units in the three live wire protection branches respectively include an inductor La, an inductor Lb, and an inductor Lc, the second protection unit 1312 includes a varistor RV6, and the first protection unit includes a varistor RV5. Optionally, the third protection units in the three live wire protection branches further respectively include a fuse Fa, a fuse Fb, and a fuse Fc. The fuse Fa is connected to the inductor La in series, the fuse Fb is connected to the inductor Lb in series, and the fuse Fc is connected to the inductor Lc in series. The ninth protection unit 121 includes a varistor RV1, the tenth protection unit 122 includes a varistor RV3, and the eleventh protection unit 123 includes a varistor RV2.

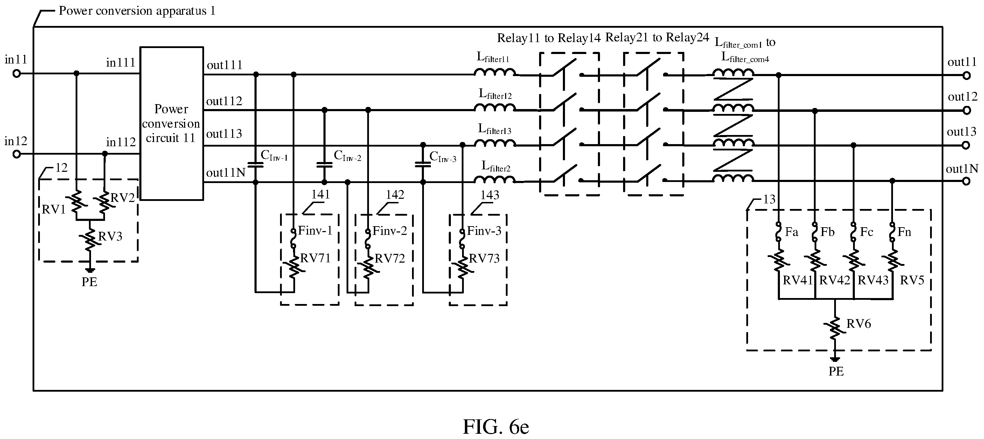

In addition, to avoid a problem that the inductor and the capacitor in the power conversion apparatus 1 oscillate due to a differential-mode lightning current between the neutral wire end out1N and at least one of the three live wire ends of the power conversion apparatus 1, and consequently the capacitor fails due to an excessively high voltage at the two ends of the capacitor, in the power conversion apparatus 1, a protection unit may further be connected to two ends of the capacitor or the inductor in parallel, or a second alternating current protection circuit is disposed between each of the three live wire ends of the power conversion apparatus 1 and the neutral wire end out1N. An implementation of avoiding a capacitor failure is applicable to any power conversion apparatus 1 shown in FIG. 6a to FIG. 6d. Therefore, for ease of description, the following uses the power conversion apparatus 1 shown in FIG. 6b as an example for description with reference to the power conversion apparatus 1 shown in FIG. 6e to FIG. 6h.

In an optional implementation, the power conversion apparatus 1 further includes a fourth protection unit 141, a fourth protection unit 142, and a fourth protection unit 143. The fourth protection unit 141 is connected to a capacitor C_{Inv-1} in parallel, and the fourth protection unit 142 is connected to a capacitor C_{Inv-2} in parallel, and the fourth protection unit 143 is connected to a capacitor C_{Inv-3} in parallel. The fourth protection unit 141, the fourth protection unit 142, and the fourth protection unit 143 each include one protection element, or at least two protection elements that are connected in series or in parallel. The protection element includes a gas discharge tube, a varistor, or a transient suppression diode.

Specifically, when a differential-mode lightning current exists between each of the three live wire ends and the neutral wire end out1N of the power conversion apparatus 1, voltages at two ends of the capacitor C_{Inv-1}, two ends of the capacitor C_{Inv-2}, and two ends of the capacitor C_{Inv-3} are all greater than a third threshold. In this case, the fourth protection unit 141, the fourth protection unit 142, and the fourth protection unit 143 are all in a turn-on state, so that the capacitor C_{Inv-1}, the capacitor C_{Inv-2}, and the capacitor C_{Inv-3} are all short-circuited, and the inductor and the capacitor in the differential mode lightning current loop 2 cannot oscillate. This can avoid a failure caused by an excessively high voltage between the two ends of the capacitor, to improve stability of the power conversion apparatus 1.

For example, as shown in FIG. 6e, the fourth protection unit 141 includes a varistor RV71, the fourth protection unit 142 includes a varistor RV72, and the fourth protection unit 143 includes a varistor RV73. Optionally, the fourth protection unit 141 further includes a fuse Finv-1, and the fuse Finv-1 is connected to the varistor RV71 in series. The fourth protection unit 142 further includes a fuse Finv-2, and the fuse Finv-2 is connected to the varistor RV72 in series. The fourth protection unit 143 further includes a fuse Finv-3, and the fuse Finv-3 is connected to the varistor RV73 in series.

In another optional implementation, the power conversion apparatus 1 further includes a fifth protection unit 151, a fifth protection unit 152, a fifth protection unit 153, and a sixth protection unit 16. The fifth protection unit 151, the fifth protection unit 152, and the fifth protection unit 153 are all connected to different first inductors in parallel, and the sixth protection unit 16 is connected to the second inductor in parallel. For example, the first inductors are inductors L_{filter11-13}, and the second inductor is an inductor L_{filter2}. Each of the fifth protection unit 151, the fifth protection unit 152, the fifth protection unit 153, and the sixth protection unit 16 includes one protection element, or at least two protection elements that are connected in series or in parallel. The protection element includes a gas discharge tube, a varistor, or a transient suppression diode.

Specifically, when a differential-mode lightning current exists between each of the three live wire ends and the neutral wire end out1N of the power conversion apparatus 1, both a voltage between two ends of each of the inductors L_{filter11-13} and a voltage between two ends of the inductor L_{filter2} are greater than a fourth threshold. In this case, the fifth protection unit 151, the fifth protection unit 152, the fifth protection unit 153, and the sixth protection unit 16 are all in a turn-on state, so that the inductors L_{filter11-13} and the inductor L_{filter2} are all short-circuited, and the inductor and the capacitor in the differential-mode lightning current loop 2 cannot oscillate. This can avoid a failure caused by an excessively high voltage between the two ends of the capacitor, to improve stability of the power conversion apparatus 1.

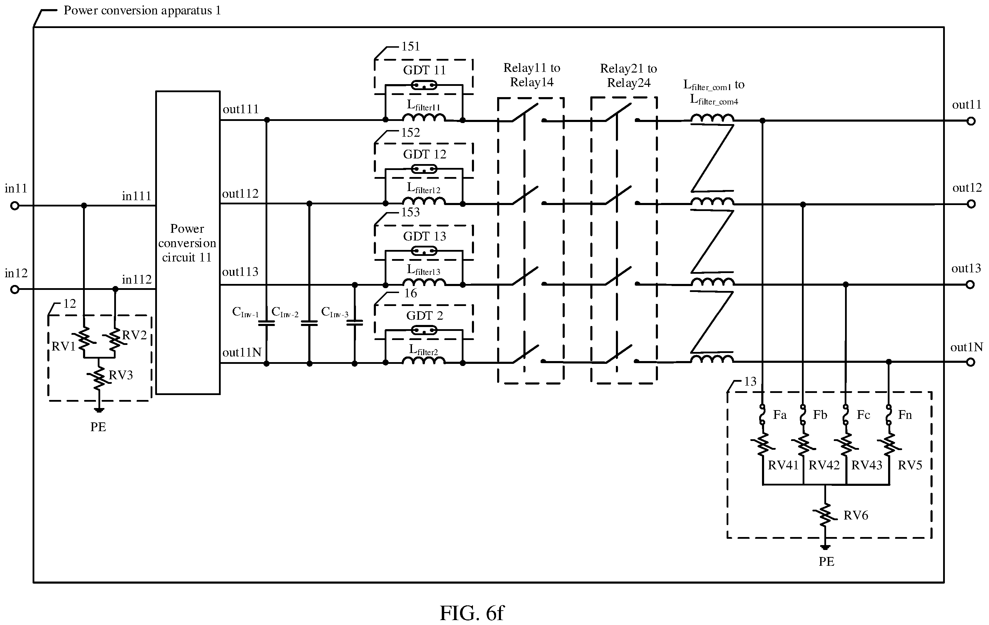

For example, as shown in FIG. 6f, the fifth protection unit 151 includes a gas discharge tube GDT 11, the fifth protection unit 152 includes a gas discharge tube GDT 12, the fifth protection unit 153 includes a gas discharge tube GDT 13, and the sixth protection unit 16 includes a gas discharge tube GDT 2.

In another optional implementation, the power conversion apparatus 1 further includes a second alternating current side protection circuit 171, a second alternating current side protection circuit 172, and a second alternating current side protection circuit 173. The second alternating current side protection circuit 171 is connected between the live wire end out11 and the neutral wire end out1N of the power conversion apparatus 1, and is configured to be in a conducted state when an alternating current end voltage between the live wire end out11 and the neutral wire end out1N of the power conversion apparatus 1 is greater than a fifth threshold, for the alternating current end voltage between the live wire end out11 and the neutral wire end out1N to be clamped at a third voltage value. The second alternating current side protection circuit 172 is connected between the live wire end out12 and the neutral wire end out1N of the power conversion apparatus 1, and is configured to be in a conducted state when an alternating current end voltage between the live wire end out12 and the neutral wire end out1N of the power conversion apparatus 1 is greater than the fifth threshold, for the alternating current end voltage between the live wire end out12 and the neutral wire end out1N to be clamped at the third voltage value. The second alternating current side protection circuit 173 is connected between the live wire end out13 and the neutral wire end out1N of the power conversion apparatus 1, and is configured to be in a conducted state when an alternating current end voltage between the live wire end out13 and the neutral wire end out1N of the power conversion apparatus 1 is greater than the fifth threshold, for the alternating current end voltage between the live wire end out13 and the neutral wire end out1N to be clamped at the third voltage value. The second alternating current side protection circuit 171, the second alternating current side protection circuit 172, and the second alternating current side protection circuit 173 each include a seventh protection unit and an eighth protection unit that are connected in series, and each of the seventh protection unit and the eighth protection unit includes one protection element, or at least two protection elements that are connected in series or in parallel. The protection element includes a gas discharge tube, a varistor, or a transient suppression diode.

The first protection unit 1311 and the third protection unit 1321 are configured to be in the turn-on state when the alternating current end voltage between the live wire end out11 and the neutral wire end out1N is greater than a sixth threshold, for the alternating current end voltage between the live wire end out11 and the neutral wire end out1N to be clamped at a fourth voltage value. The first protection unit 1331 and the third protection unit 1321 are configured to be in the turn-on state when the alternating current end voltage between the live wire end out12 and the neutral wire end out1N is greater than the sixth threshold, for the alternating current end voltage between the live wire end out12 and the neutral wire end out1N to be clamped at the fourth voltage value. The first protection unit 1341 and the third protection unit 1321 are configured to be in the turn-on state when the alternating current end voltage between the live wire end out13 and the neutral wire end out1N is greater than the sixth threshold, for the alternating current end voltage between the live wire end out13 and the neutral wire end out1N to be clamped at the fourth voltage value. The fourth voltage value is greater than the third voltage value, and the sixth threshold is greater than the fifth threshold.

Specifically, when the differential-mode lightning current exists between each of the three live wire ends and the neutral wire end out1N of the power conversion apparatus 1, an alternating current end voltage between each of the three live wire ends and the neutral wire end out1N starts to increase. Because the fifth threshold is less than the sixth threshold, when the alternating current end voltage between each of the three live wire ends and the neutral wire end out1N is greater than the fifth threshold, the seventh protection units and the eighth protection units in the second alternating current side protection circuit 171, the second alternating current side protection circuit 172, and the second alternating current side protection circuit 173 are all in the conducted state. In addition, the alternating current end voltage between each of the three live wire ends and the neutral wire end out1N is clamped at the third voltage value, the first protection unit 1311 and the third protection unit 1321 are short-circuited by the second alternating current side protection circuit 171 and are in a turn-off state, the first protection unit 1331 and the third protection unit 1321 are short-circuited by the second alternating current side protection circuit 172 and are in a turn-off state, and the first protection unit 1341 and the third protection unit 1321 are short-circuited by the second alternating current side protection circuit 173 and are in a turn-off state. In this case, a part of the differential-mode lightning current is discharged via the second alternating current side protection circuit 171, the second alternating current side protection circuit 172, and the second alternating current side protection circuit 173, and another part of the differential-mode lightning current is discharged via a loop in which the inductor and capacitor between each of the three live wire ends and the neutral wire end out1N are located. In addition, if there is no second alternating current side protection circuit 171 to the second alternating current side protection circuit 173 in the power conversion apparatus 1, when the differential-mode lightning current exists between each of the three live wire ends and the neutral wire end out1N of the power conversion apparatus 1, the alternating current end voltage between each of the three live wire ends and the neutral wire end out1N is greater than the sixth threshold, the first protection unit 1311, the first protection unit 1331, the first protection unit 1341, and the third protection unit 1321 are all in the turn-on state, and the alternating current end voltage between each of the three live wire ends and the neutral wire end out1N is clamped at the fourth voltage value. In this case, a part of the differential-mode lightning current is discharged via the first protection unit 1311, the first protection unit 1331, the first protection unit 1341, and the third protection unit 1321, and the another part of the differential-mode lightning current is discharged via the loop in which the inductor and the capacitor between each of the three live wire ends and the neutral wire end out1N are located. Because the third voltage value is less than the fourth voltage value, the power conversion apparatus 1 may reduce the clamping voltage of the alternating current end by disposing the second alternating current side protection circuit 171 to the second alternating current side protection circuit 173, to reduce a voltage between two ends of the capacitor. This can avoid a failure caused by an excessively high voltage between the two ends of the capacitor, to improve stability of the power conversion apparatus 1.

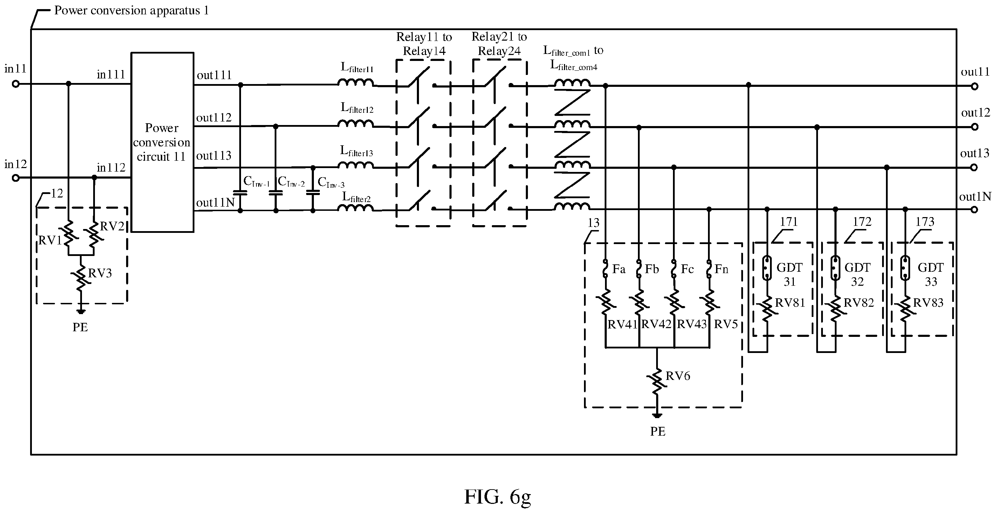

For example, as shown in FIG. 6g, the first protection unit 1311 includes a varistor RV41, the first protection unit 1331 includes a varistor RV42, the first protection unit 1341 includes a varistor RV43, and the third protection unit 1321 includes a varistor RV5. The seventh protection units in the second alternating current side protection circuit 171 to the second alternating current side protection circuit 173 respectively include a varistor RV81 to a varistor RV83. The eighth protection units in the second alternating current side protection circuit 171 to the second alternating current side protection circuit 173 respectively include a gas discharge tube GDT 31 to a gas discharge tube GDT 33. A sum of actuating voltage thresholds of the varistor RV41 and the varistor RV5 is greater than a sum of actuating voltage thresholds of the varistor RV81 and the gas discharge tube GDT 31. A sum of clamping voltages of the varistor RV41 and the varistor RV5 is greater than a sum of clamping voltages of the varistor RV81 and the gas discharge tube GDT 31. A sum of actuating voltage thresholds of the varistor RV42 and the varistor RV5 is greater than a sum of actuating voltage thresholds of the varistor RV82 and the gas discharge tube GDT 32. A sum of clamping voltages of the varistor RV42 and the varistor RV5 is greater than a sum of clamping voltages of the varistor RV82 and the gas discharge tube GDT 32. A sum of actuating voltage thresholds of the varistor RV43 and the varistor RV5 is greater than a sum of actuating voltage thresholds of the varistor RV83 and the gas discharge tube GDT 33. A sum of clamping voltages of the varistor RV43 and the varistor RV5 is greater than a sum of clamping voltages of the varistor RV83 and the gas discharge tube GDT 33.

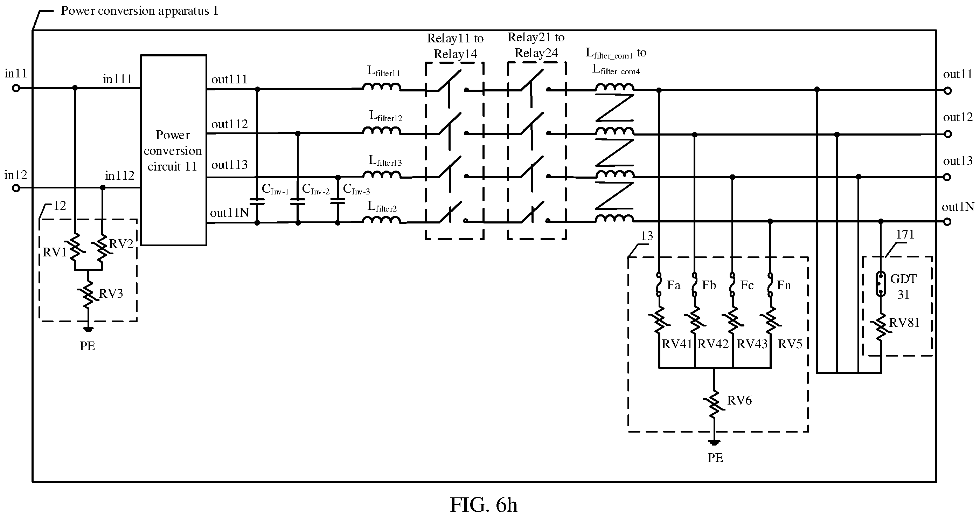

Optionally, to reduce circuit costs, the three live wire ends and the neutral wire end out1N of the power conversion apparatus 1 may share one second alternating current side protection circuit. For details, refer to the second alternating current side protection circuit 171 shown in FIG. 6h.

In still another optional implementation, the power conversion apparatus 1 further includes a second alternating current side protection circuit 171, a second alternating current side protection circuit 172, and a second alternating current side protection circuit 173. The second alternating current side protection circuit 171 is connected between the live wire end out11 and the neutral wire end out1N of the power conversion apparatus 1, and is configured to be in a conducted state when an alternating current end voltage between the live wire end out11 and the neutral wire end out1N of the power conversion apparatus 1 is greater than a fifth threshold. The second alternating current side protection circuit 172 is connected between the live wire end out12 and the neutral wire end out1N of the power conversion apparatus 1, and is configured to be in a conducted state when an alternating current end voltage between the live wire end out12 and the neutral wire end out1N of the power conversion apparatus 1 is greater than the fifth threshold. The second alternating current side protection circuit 173 is connected between the live wire end out13 and the neutral wire end out1N of the power conversion apparatus 1, and is configured to be in a conducted state when an alternating current end voltage between the live wire end out13 and the neutral wire end out1N of the power conversion apparatus 1 is greater than the fifth threshold. The second alternating current side protection circuit 171, the second alternating current side protection circuit 172, and the second alternating current side protection circuit 173 each include a seventh protection unit and an eighth protection unit that are connected in series. One of the seventh protection unit and the eighth protection unit includes a gas discharge tube, and the other protection unit includes one protection element, or at least two protection elements that are connected in series or in parallel. The protection element includes a gas discharge tube, a varistor, or a transient suppression diode.

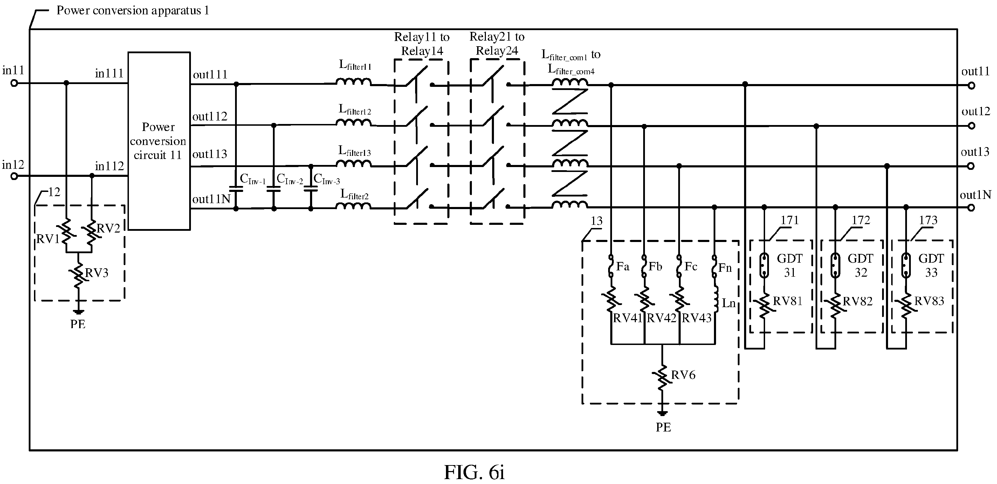

For example, as shown in FIG. 6i, the first protection unit 1311 includes a varistor RV41, the first protection unit 1331 includes a varistor RV42, the first protection unit 1341 includes a varistor RV43, and the third protection unit 1321 includes an inductor Ln. The seventh protection units in the second alternating current side protection circuit 171 to the second alternating current side protection circuit 173 respectively include a varistor RV81 to a varistor RV83. The eighth protection units in the second alternating current side protection circuit 171 to the second alternating current side protection circuit 173 respectively include a gas discharge tube GDT 31 to a gas discharge tube GDT 33. Specifically, when a differential-mode lightning current exists between each of the three live wire ends and the neutral wire end out1N of the power conversion apparatus 1, a change rate of a current flowing through the inductor Ln increases, and an impedance value of the inductor Ln increases accordingly. In this way, a branch in which the inductor Ln and each of the varistor RV41 to the varistor RV43 are located is in a disconnected state. When the differential-mode lightning current exists between each of the three live wire ends and the neutral wire end out1N of the power conversion apparatus 1, an alternating current end voltage between each of the three live wire ends and the neutral wire end out1N is greater than the fifth threshold, and the varistor RV81 to the varistor RV83 and the gas discharge tube GDT 31 to the gas discharge tube GDT 33 are all in a turn-on state. In this way, a part of the differential-mode lightning current is discharged via the second alternating current side protection circuit 171 to the second alternating current side protection circuit 173, and another part of the differential-mode lightning current is discharged via a loop in which the inductor and the capacitor between each of the three live wire ends and the neutral wire end out1N are located. Because a clamping voltage of the gas discharge tube is very low and can be ignored, the power conversion apparatus 1 can reduce the clamping voltage of the alternating current end by disposing the second alternating current side protection circuit 171 to the second alternating current side protection circuit 173 including gas discharge tubes, to reduce a voltage between two ends of the capacitor. This can avoid a failure caused by an excessively high voltage between the two ends of the capacitor, to improve stability of the power conversion apparatus 1.

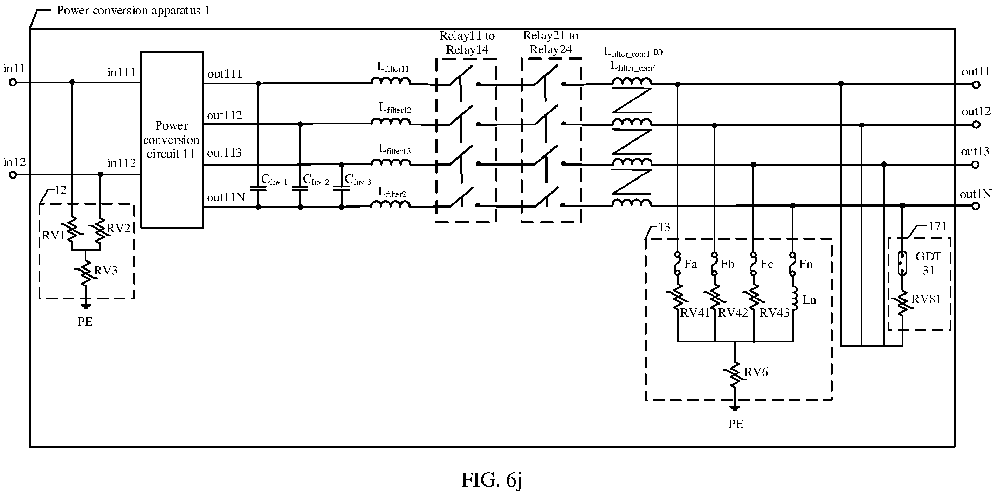

Optionally, to reduce circuit costs, the three live wire ends and the neutral wire end out1N of the power conversion apparatus 1 may share one second alternating current side protection circuit. For details, refer to the second alternating current side protection circuit 171 shown in FIG. 6j.

It should be noted that, a manner of disposing the protection units at two ends of the capacitor or the inductor shown in FIG. 6e and FIG. 6f to avoid an excessively high voltage between the two ends of the capacitor is also applicable to the power conversion apparatus 1 shown in FIG. 6c and FIG. 6d. Manners of disposing the second alternating current side protection circuit shown in FIG. 6i and FIG. 6j to reduce the voltage between the two ends of the capacitor is also applicable to the power conversion apparatus 1 shown in FIG. 6d.

In embodiments of this application, when the common-mode lightning current exists at the direct current end of the power conversion apparatus 1, the power conversion apparatus 1 may discharge the common-mode lightning current via the direct current side protection circuit 12, and the live wire protection branch and/or the neutral wire protection branch that are in the conducted state, to quickly discharge the common-mode lightning current. Because the absolute value of the difference between the first voltage value and the second voltage value is less than or equal to the safety error threshold, in a process of discharging the common-mode lightning current, a case in which the clamping voltage of the direct current side protection circuit 12 is greater than a clamping voltage of the first alternating current side protection circuit 13 and a most part of the common-mode lightning current flows through the power conversion circuit 11 can be avoided. This avoids damage to a power component in the power conversion circuit 11, and protects the power conversion apparatus 1, to improve stability of the power conversion apparatus 1. In addition, when the differential-mode lightning current exists between each of the three live wire ends and the neutral wire end out1N of the power conversion apparatus **1,** a protection circuit is connected between the two ends of the capacitor or the inductor in parallel, so that the inductor and the capacitor cannot oscillate, or the second alternating current side protection circuit with a low clamping voltage is disposed between each of the three live wire ends and the neutral wire end out1N of the power conversion apparatus 1. This can avoid a failure caused by an excessively high voltage between the two ends of the capacitor, to improve stability of the power conversion apparatus 1.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion apparatus, wherein the power conversion apparatus comprises a direct current end, a power conversion circuit, a direct current side protection circuit, a first alternating current side protection circuit, and an alternating current end, wherein
the power conversion circuit is connected between the direct current end and the alternating current end, and is configured to implement electric energy conversion between the direct current end and the alternating current end;
the direct current side protection circuit is connected between the direct current end and protective earthing, and is configured to be in a conducted state when a direct current end voltage between the direct current end and the protective earthing is greater than a first threshold, for the direct current end voltage to be clamped at a first voltage value; and
the first alternating current side protection circuit comprises a plurality of protection branches, and the plurality of protection branches are connected between the alternating current end and the protective earthing, and are configured as: when an alternating current end voltage between the alternating current end and the protective earthing is greater than a second threshold, at least one of the plurality of protection branches is in a conducted state, for the alternating current end voltage to be clamped at a second voltage value, wherein an absolute value of a difference between the first voltage value and the second voltage value is less than or equal to a safety error threshold.

2. The power conversion apparatus according to claim 1, wherein the alternating current end comprises a live wire end and a neutral wire end, and the plurality of protection branches comprise a live wire protection branch and a neutral wire protection branch, wherein
the live wire protection branch is connected between the live wire end and the protective earthing, and is configured to be in a conducted state when a live wire end voltage between the live wire end and the protective earthing is greater than the second threshold, for the live wire end voltage to be clamped at the second voltage value; and
the neutral wire protection branch is connected between the neutral wire end and the protective earthing, and is configured to be in a conducted state when a neutral wire end voltage between the neutral wire end and the protective earthing is greater than the second threshold, for the neutral wire end voltage to be clamped at the second voltage value.

3. The power conversion apparatus according to claim 2, wherein the live wire protection branch comprises a first protection unit and a second protection unit, and the neutral wire protection branch comprises the second protection unit and a third protection unit, wherein
one end of the first protection unit and one end of the third protection unit are respectively connected to the live wire end and the neutral wire end, and the other end of the first protection unit is connected to the other end of the third protection unit and then connected to the protective earthing via the second protection unit;
the first protection unit is configured to be in a turn-on state when the live wire end voltage is greater than the second threshold;
the second protection unit is configured to be in a turn-on state when the live wire end voltage or the neutral wire end voltage is greater than the second threshold; and
the third protection unit is configured to be in a turn-on state when the neutral wire end voltage is greater than the second threshold.

4. The power conversion apparatus according to claim 3, wherein each of the first protection unit, the second protection unit, and the third protection unit comprises one protection element, or at least two protection elements that are connected in series or in parallel, wherein the protection element comprises a gas discharge tube, a varistor, or a transient suppression diode.

5. The power conversion apparatus according to claim 1, wherein the alternating current end comprises a first end and a second end, and the plurality of protection branches comprise a first protection branch and a second protection branch, wherein
the first protection branch is connected between the first end and the protective earthing, and the second protection branch is connected between the second end and the protective earthing;
an impedance value of the second protection branch increases as a change rate of a current flowing through the second protection branch increases, for the second protection branch to be in a disconnected state and a first end voltage between the first end and the protective earthing to be greater than the second threshold; and
the first protection branch is configured to be in a conducted state when the first end voltage is greater than the second threshold, for the first end voltage to be clamped at the second voltage value.

6. The power conversion apparatus according to claim 5, wherein the first protection branch comprises a first protection unit and a second protection unit, and the second protection branch comprises the second protection unit and a third protection unit, wherein
one end of the first protection unit and one end of the third protection unit are respectively connected to the first end and the second end, and the other end of the first protection unit is connected to the other end of the third protection unit and then connected to the protective earthing via the second protection unit;
the first protection unit and the second protection unit are configured to be in a turn-on state when the first end voltage is greater than the second threshold; and
an impedance value of the third protection unit increases as a change rate of a current flowing through the third protection unit increases, for the third protection unit to be in a turn-off state.

7. The power conversion apparatus according to claim 6, wherein each of the first protection unit and the second protection unit comprises one protection element, or at least two protection elements that are connected in series or in parallel, wherein the protection element comprises a gas discharge tube, a varistor, or a transient suppression diode, and the third protection unit comprises an inductor.

8. The power conversion apparatus according to any one of claims 5 to 7, wherein the first end is a live wire end, the second end is a neutral wire end, the first protection branch is a live wire protection branch, the second protection branch is a neutral wire protection branch, and the first end voltage is a live wire end voltage; or
the first end is a neutral wire end, the second end is a live wire end, the first protection branch is a neutral wire protection branch, the second protection branch is a live wire protection branch, and the first end voltage is a neutral wire end voltage.

9. The power conversion apparatus according to any one of claims 1 to 8, wherein the power conversion apparatus further comprises a capacitor and a fourth protection unit, wherein the capacitor is connected between a live wire end and a neutral wire end of the power conversion circuit, and the fourth protection unit is connected to the capacitor in parallel, and is configured to be in a turn-on state when a voltage between two ends of the capacitor is greater than a third threshold.

10. The power conversion apparatus according to any one of claims 1 to 9, wherein the power conversion apparatus further comprises a first inductor, a second inductor, a fifth protection unit, and a sixth protection unit, and the alternating current end comprises the live wire end and the neutral wire end, wherein
the live wire end of the power conversion circuit is connected to the live wire end of the power conversion apparatus via the first inductor, and the neutral wire end of the power conversion circuit is connected to the neutral wire end of the power conversion apparatus via the second inductor;
the fifth protection unit is connected to the first inductor in parallel, and is configured to be in a turn-on state when a voltage between two ends of the first inductor is greater than a fourth threshold; and
the sixth protection unit is connected to the second inductor in parallel, and is configured to be in a turn-on state when a voltage between two ends of the second inductor is greater than the fourth threshold.

11. The power conversion apparatus according to claim 9 or 10, wherein each of the fourth protection unit, the fifth protection unit, and the sixth protection unit comprises one protection element, or at least two protection elements that are connected in series or in parallel, wherein the protection element comprises a gas discharge tube, a varistor, or a transient suppression diode.

12. The power conversion apparatus according to claim 3 or 4, wherein the power conversion apparatus further comprises a second alternating current side protection circuit, wherein
the second alternating current side protection circuit is connected between the live wire end and the neutral wire end, and is configured to be in a conducted state when an alternating current end voltage between the live wire end and the neutral wire end is greater than a fifth threshold, for the alternating current end voltage to be clamped at a third voltage value; and
the first protection unit and the third protection unit are configured to be in a conducted state when the alternating current end voltage is greater than a sixth threshold, for the alternating current end voltage to be clamped at a fourth voltage value, wherein the fourth voltage value is greater than the third voltage value, and the sixth threshold is greater than the fifth threshold.

13. The power conversion apparatus according to claim 12, wherein the second alternating current side protection circuit comprises a seventh protection unit and an eighth protection unit that are connected in series, wherein each of the seventh protection unit and the eighth protection unit comprises one protection element, or at least two protection elements that are connected in series or in parallel, and the protection element comprises a gas discharge tube, a varistor, or a transient suppression diode.

14. The power conversion apparatus according to claim 8, wherein the power conversion apparatus further comprises a second alternating current side protection circuit, wherein
the second alternating current side protection circuit is connected between the live wire end and the neutral wire end, and is configured to be in a conducted state when an alternating current end voltage between the live wire end and the neutral wire end is greater than a fifth threshold; and
the second alternating current side protection circuit comprises a seventh protection unit and an eighth protection unit that are connected in series, one of the seventh protection unit and the eighth protection unit comprises a gas discharge tube, the other protection unit comprises one protection element, or at least two protection elements that are connected in series or in parallel, and the protection element comprises a gas discharge tube, a varistor, or a transient suppression diode.
